# EUROPEAN PATENT SPECIFICATION

(11) **EP 4 005 155 B1**
(45) Date of publication and mention of the grant of the patent: **16.08.2023**
(21) Application number: 19772897.5
(22) Date of filing: 19.08.2019
(51) Int. Cl.: H04L 41/16

(54) **PREDICTIVE AI AUTOMATED CLOUD SERVICE TURN-UP**
PRÄDIKTIVER KI-AUTOMATISIERTER CLOUD-SERVICE-AUFTRITT
ACTIVATION AUTOMATISÉE DE SERVICES EN NUAGE À INTELLIGENCE ARTIFICIELLE PRÉDICTIVE

(30) Priority: 29.07.2019 US 201962879878 P
(43) Date of publication of application: 01.06.2022
(73) Proprietor: Level 3 Communications, LLC, Broomfield, CO 80021 (US)
(72) Inventor: CASEY, Steven M., Littleton, Colorado 80120 (US); OPFERMAN, Stephen, Denver, Colorado 80202 (US); CASTRO, Felipe, Broomfield, Colorado 80121 (US); SAVILL, Paul, Broomfield, Colorado 80021 (US); MCBRIDE, Kevin M., Littleton, Colorado 80120 (US)
(74) Representative: Marks & Clerk LLP
(86) International application number: PCT/US2019/047090
(87) International publication number: WO 2021/021216

(56) References cited:
- EP-A1- 3 399 701
- US-A1- 2014 129 483
- US-B1- 9 760 399

## Description

### CROSS REFERENCE TO RELATED APPLICATIONS

This application claims priority to U.S. Provisional Patent Application Ser. No. 62/879,878, filed July 29, 2019 by Steven M. Casey et al. (attorney docket no. 1538-US-P1), entitled "Predictive AI Automated Cloud Service Turn-Up,"

### COPYRIGHT STATEMENT

A portion of the disclosure of this patent document contains material that is subject to copyright protection. The copyright owner has no objection to the facsimile reproduction by anyone of the patent document or the patent disclosure as it appears in the Patent and Trademark Office patent file or records, but otherwise reserves all copyright rights whatsoever.

### FIELD

The present disclosure relates, in general, to cloud and network service provisioning, and more particularly to a predictive artificial intelligence system for automatically provisioning cloud and network services.

### BACKGROUND

Cloud service subscribers often use various cloud services from cloud service providers from different locations and at different times. Depending on the context, a customer may have different service demands and utilize different services. To efficiently allocate cloud resources, and to reduce costs for cloud service subscribers, cloud service providers have, for example, allowed cloud services to be used on an on-demand basis or as scheduled by a subscriber.

Conventionally, providing on-demand access to cloud services requires a cloud-provider to responsively turn-up a cloud service upon request by a customer. Cloud service turn-up typically requires provisioning of corresponding cloud and network resources to a customer, and quality-of-service validation for each cloud-service provided in this manner. This further requires significant time and costs associated with the turn-up process before a subscriber can begin using their respective cloud services. Moreover, often the turn-up process requires manual configuration by a subscriber and/or the cloud service provider each time a cloud service is requested and/or turned-up. Document EP 3 399 701 A1 discloses a platform instance module for managing software components installed on target devices of a customer environment, wherein some of the software components use public cloud services provided by a cloud computing system.

Accordingly, tools and techniques for predictive, automatic cloud service turn-up are provided.

### BRIEF DESCRIPTION OF THE DRAWINGS

A further understanding of the nature and advantages of the embodiments may be realized by reference to the remaining portions of the specification and the drawings, in which like reference numerals are used to refer to similar components. In some instances, a sub-label is associated with a reference numeral to denote one of multiple similar components. When reference is made to a reference numeral without specification to an existing sub-label, it is intended to refer to all such multiple similar components.
Fig. 1A is a schematic block diagram of an example architecture for providing automated on-demand cloud service turn-up, in accordance with various embodiments;
Fig. 1B is a schematic block diagram of an example architecture for providing secure automated on-demand cloud service turn-up, in accordance with various embodiments;
Fig. 2A is a schematic block diagram of an example architecture for providing automated on-demand software defined network and cloud service turn-up, in accordance with various embodiments;
Fig. 2B is a schematic block diagram of an example architecture for providing secure automated on-demand software defined network and cloud service turn-up, in accordance with various embodiments;
Fig. 3 is a schematic block diagram of an artificial intelligence pipeline for predictive, automated turn-up of cloud and network services, in accordance with various embodiments;
Fig. 4 is a flow diagram of a method for automated on-demand network and cloud service turn-up, in accordance with various embodiments;
Fig. 5 is a schematic block diagram of a computer system for an automated on-demand network and cloud service turn-up, in accordance with various embodiments; and
Fig. 6 is a schematic block diagram illustrating system of networked computer devices, in accordance with various embodiments.

### DETAILED DESCRIPTION OF CERTAIN EMBODIMENTS

The following detailed description illustrates a few exemplary embodiments in further detail to enable one of skill in the art to practice such embodiments. The described examples are provided for illustrative purposes and are not intended to limit the scope of the invention.

Unless otherwise indicated, all numbers used herein to express quantities, dimensions, and so forth used should be understood as being modified in all instances by the term "about." In this application, the use of the singular includes the plural unless specifically stated otherwise, and use of the terms "and" and "or" means "and/or" unless otherwise indicated. Moreover, the use of the term "including," as well as other forms, such as "includes" and "included," should be considered non-exclusive. Also, terms such as "element" or "component" encompass both elements and components comprising one unit and elements and components that comprise more than one unit, unless specifically stated otherwise.

The various embodiments include, without limitation, methods, systems, and/or software products. Merely by way of example, a method may comprise one or more procedures, any or all of which are executed by a computer system. Correspondingly, an embodiment may provide a computer system configured with instructions to perform one or more procedures in accordance with methods provided by various other embodiments. Similarly, a computer program may comprise a set of instructions that are executable by a computer system (and/or a processor therein) to perform such operations. In many cases, such software programs are encoded on physical, tangible, and/or non-transitory computer readable media (such as, to name but a few examples, optical media, magnetic media, and/or the like).

In an aspect, a system for predictive AI automated cloud service turn-up is provided. The system includes an AI pipeline and a service orchestration server. The AI pipeline may include a processor and non-transitory computer readable media comprising instructions executable by the processor to obtain, via the one or more customer data sources, customer usage data associated with a first customer from one or more customer data sources, wherein the customer usage data is indicative of usage patterns of one or more cloud services by the first customer, generate, via a predictive model, predicted usage data based on the customer usage data, wherein the predicted usage data includes a prediction of an individual cloud service of the one or more cloud services predicted to be used by the first customer, and publish the predicted usage data. The service orchestration server may be coupled to the AI pipeline, and configured to obtain the predicted usage data from the AI pipeline, and turn-up the individual cloud service based on the predicted usage data.

In another aspect, an apparatus for predictive AI automated cloud service turn-up is provided. The apparatus includes a processor, and non-transitory computer readable media comprising instructions executable by the processor to obtain, via an AI pipeline, customer usage data associated with a first customer from one or more customer data sources, wherein the customer usage data is indicative of usage patterns of one or more cloud services by the first customer, generate, via the Al pipeline, predicted usage data based on the customer usage data, wherein the predicted usage data includes a prediction of an individual cloud service of the one or more cloud services predicted by a predictive model to be used by the first customer, and publish, via the AI pipeline, the predicted usage data. The instructions may further be executable by the processor to obtain, via a service orchestration server, the predicted usage data from the AI pipeline, and turn-up, via the service orchestration server, the individual cloud service based on the predicted usage data.

In a further aspect, a method for predictive AI automated cloud service turn-up is provided. The method includes obtaining, via an AI pipeline, customer usage data associated with a first customer from one or more customer data sources, wherein the customer usage data is indicative of usage patterns of one or more cloud services by the first customer, generating, via the AI pipeline, predicted usage data based on the customer usage data, wherein the predicted usage data includes a prediction of an individual cloud service of the one or more cloud services predicted by a predictive model to be used by the first customer, and publishing, via the AI pipeline, the predicted usage data. The method further includes obtaining, via a service orchestration server, the predicted usage data from the AI pipeline, and turning-up, via the service orchestration server, the individual cloud service based on the predicted usage data.

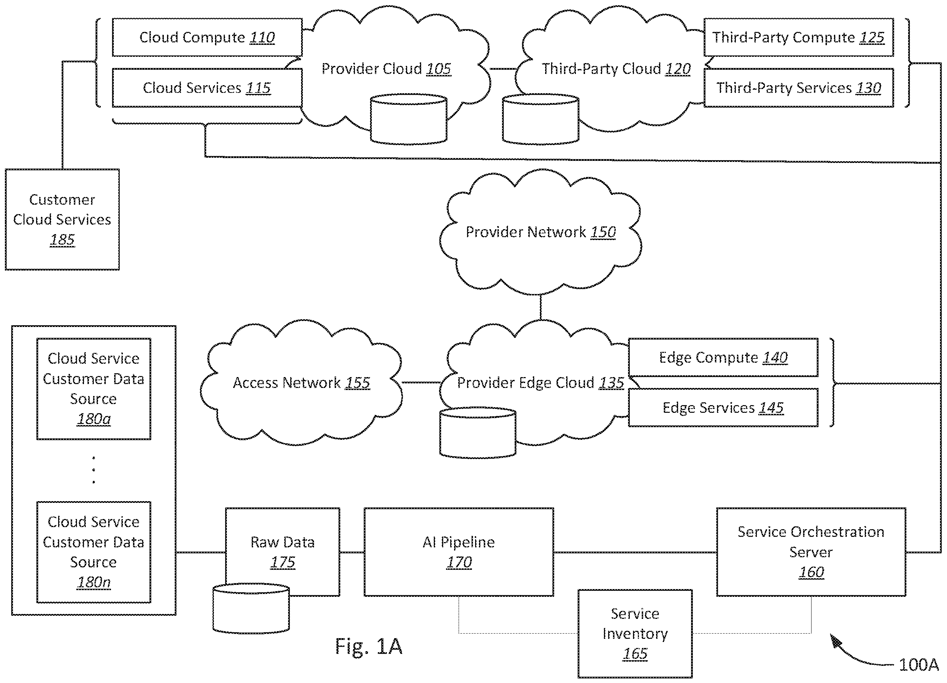

Fig. 1A is a schematic block diagram of an example architecture 100A for providing automated on-demand cloud service turn-up. In various embodiments, the system 100A includes a provider cloud 105 including cloud compute 110 resources and cloud services 115, third-party cloud 120 include third-party compute resources 125 and third-party services 130, a provider edge cloud 135 including edge compute resources 140 and edge services 145, provider network 150, access network 155, service orchestration server 160, service inventory 165, AI pipeline 170, raw data 175, one or more cloud service customer usage data sources 180a-180n, and customer cloud services 185. It should be noted that the various components of the system 100A are schematically illustrated in Fig. 1A, and that modifications to the system 100A may be possible in accordance with various embodiments.

In various embodiments, the provider cloud 105 may be coupled to a third-party cloud 120. Each of the provider cloud 105 and third-party cloud 120 may, in turn, be coupled to the service orchestration server 160. The service orchestration server 160 may further be coupled to a provider edge cloud 135, which may be part of and/or coupled to the provider network 150. The access network 155 may similarly be coupled to the provider edge cloud 135.

The service orchestration server 160 may be coupled to service inventory 165, which may further be coupled to the AI pipeline 170. Similarly, the AI pipeline 170 may also be coupled to the service inventory 165. The AI pipeline 170 may be coupled to the one or more cloud service customer data sources 180a-180n from which the AI pipeline 170 may receive raw data 175. Customer cloud services 185 may be received, from the provider cloud 105, third-party cloud 120, and/or provider edge cloud 135, and in some examples, may include a set of cloud compute resources 110 and/or cloud services 115, third-party compute resources 125 and/or third-party services 130, edge compute resources 140 and/or edge services 145.

In various embodiments, the provider cloud 105 may be a cloud service platform associated with a cloud service provider. The provider cloud 105 may include cloud compute resources 110 and may be configured to provide one or more cloud services 115 offered by the cloud service provider. In various embodiments, the provider cloud 105 may include a network and/or a plurality of network connected cloud compute resources 110, networking resources, and storage resources, as known to those in the art. The resources of the provider cloud 105 may be accessible by a customer via a wide area network (WAN), such as the internet.

Similarly, the third-party cloud 120 may be a cloud service platform associated with a third-party cloud service provider. The third-party cloud 120 may include third-party compute resources 125 and may be configured to provide one or more third-party services. In various embodiments, like the provider cloud 105, the third-party cloud 120 may be a collection of WAN and/or internet accessible compute, storage, and networking resources, including the plurality of third-party compute resources 125, controlled by the third-party cloud service provider.

The provider edge cloud 135 may similarly be a cloud service platform associated with the cloud service provider. The provider edge cloud 135, however, in contrast with the provider cloud 105, may be accessible at an edge of the provider network 150. Therefore, the provider edge cloud 135 may be part of the cloud service provider's cloud service platform that is made available at the edge of the provider network 150. The provider edge cloud 135 may include edge compute resources 140 and edge services 145. Each of the edge compute resources 140 and edge services 145 may be made available to the customer at the network edge. For example, in some embodiments, one or more edge devices may be configured to provide the edge resources 140 and/or one or more edge services 145.

In some embodiments, the provider cloud 105 may be accessed via the provider network 150. In some further embodiments, a customer connected to the provider network 150 may further access a WAN, such as the internet, through the provider network 150. Accordingly, the provider network 150 may include, without limitation, a service provider core network, backbone network, and/or the access network 155, through which the provider edge cloud 135 and/or provider cloud may be accessed by the customer.

In various embodiments, the provider cloud 105 may be configured to be coupled to the third-party cloud 120. For example, in some embodiments, the provider cloud 105 may be coupled to the third-party cloud 120 via shared APIs and/or services. In some embodiments, the provider cloud 105 may be configured to establish connections to tire third-party cloud 120, or to otherwise access the one or more third-party compute resources 125 and/or one or more third-party services 130.

In various embodiments, a customer may purchase one or more cloud services 115, third-party services 130, and/or edge services 145 from a cloud service provider associated with the provider cloud 105 and/or provider edge cloud 135, or a third-party service provider associated with the third-party cloud 120. According to various embodiments, the system 100A may be configured to provide the one or more cloud services 115, third-party services 130, and/or edge services 145 to the customer on an on-demand and predictively as described below.

For example, in some embodiments, the service orchestration server 160 may be configured to provision one or more customer cloud services 185 from the available one or more cloud services 115 and one or more edge services 145. In yet further embodiments, the service orchestration server 160 may be configured to provision one or more third-party services 130. For example, this may include deploying, initializing, or otherwise provisioning the cloud compute resources 110, third-party compute resources 125, and/or edge compute resources 140 to provide the customer with customer cloud services 185.

In some embodiments, the system 100A may be configured to collect customer usage data associated with the customer cloud services 185. For example, the customer cloud services 185 may comprise one or more individual cloud services. Customer usage data may include, without limitation, customer location, time of day, and usage habits associated with each of the respective customer cloud services 185. For example, the cloud service provider may collect customer usage data regarding where and when each of the individual cloud services are used by a customer, and usage habits of each of the one or more individual cloud services.

In some embodiments, customer usage data may be collected via the one or more cloud service customer data sources 180a-180n. Customer service customer data sources may, accordingly, include one or more edge devices, user devices, servers, databases, etc., from which customer usage data may be obtained. For example, in some embodiments, each of the cloud service customer data sources 180a-180n may correspond to a different device associated with receiving, accessing, and/or providing the customer cloud services 185. In further examples, each of the one or more cloud service customer data sources 180a-180n may also correspond to a respective customer altogether, with the one or more cloud service customer data sources 180a-180n including customer usage data associated with a cloud service, that may be included in customer cloud services 185, but provided to a different customer. In yet further embodiments, each of the one or more cloud service customer data sources 180a-180n may correspond to respective cloud services usage data across multiple customers.

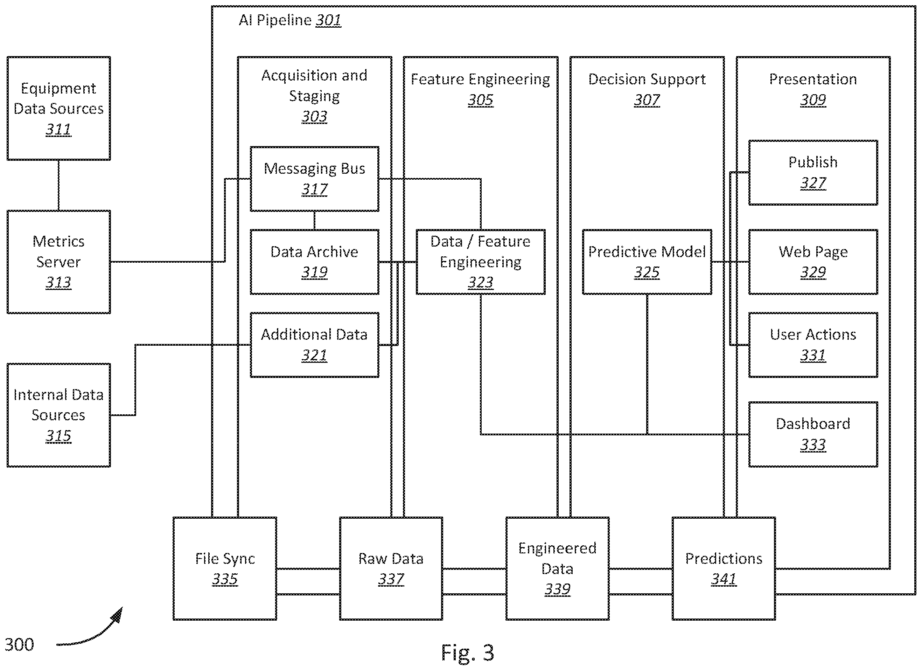

In some embodiments, the customer usage data may be captured from the one or more cloud service customer data sources 180a-180n as raw data 175. As will be described in greater detail below with respect to Fig. 3, the AI pipeline 170 may be configured to process the raw data 175 to predictively determine whether and how individual cloud services of the customer cloud services 185 should be turned up. For example, in some embodiments, the AI pipeline 170 may include, without limitation, AI and/or other machine learning (ML) logic configured to build a continuous learning model to predict network data traffic and/or cloud service usage. For example, as previously described, traffic and/or cloud service usage may be predicted based on several factors and a customer's usage patterns, including, without limitation, based on a geographic location, network location, time of day, and/or time of year that a customer accesses or is anticipated to access the customer cloud services 185. For example, one or more individual cloud services of the customer cloud services may be predicted to be needed by a user at a respective location and/or during certain times of day. In some further embodiments, the continuous learning model may be configured to predict cloud service requirements based on the occurrence of external events. For example, external events may include, without limitation, holidays, live events such as a sporting event, programming events such as a premier or finale various media content, network outages, promotional events, weather patterns, etc. In further embodiments, the AI pipeline 170 may be configured to further predict bandwidth and/or quality of service (QoS) requirements for a respective cloud and/or network service, and in some examples, based on the service, time of day, location, etc. Accordingly, the Al pipeline 170 may be configured to predict one or more individual cloud services of the customer cloud services 185 that a customer may require responsive to and/or otherwise based on the occurrence or anticipated future occurrence of the external event.

In some embodiments, the AI pipeline 170 may further be configured to request or otherwise obtain a service inventory 165 from the service orchestration server 160. The service inventory 165 may include a list of cloud services available to be orchestrated by the service orchestration server 160. For example, the service inventory 165 may be configured to indicate the customer cloud services 185 associated with the customer, the one or more provider cloud services 115, the one or more third-party services 130, one or more edge services 145, and/or a combination of the above services available to be provisioned to the customer.

In various embodiments, the AI pipeline 170 and service orchestration server 160 may be configured to run on one or more machines, physical and/or virtual. The AI pipeline 170 may therefore include, without limitation, AI/ML logic, and underlying computer hardware (physical and/or virtual), configured to run the Al / ML logic. Thus, the AI pipeline 170 may, in some embodiments, include one or more server computers. In some embodiments, the AI pipeline 170 may be coupled to the service orchestration server 160 over a network connection, such as the provider network 150. For example, in -some embodiments, the AI pipeline 170 may be in communication with an orchestration system, such as the service orchestration server 160. In some embodiments, the AI pipeline 170 may be configured to be executed remotely, such as on a remote monitoring system, or at a central office or data center associated with the provider cloud 105. In some further embodiments, the AI pipeline 170 may be configured to run locally on the service orchestration server 160.

Accordingly, in various embodiments, the AI pipeline 170 may be configured to generate predicted usage data based on the customer usage data obtained from the one or more cloud service customer data sources 180a-180n. The AI pipeline 170 may be configured to provide the predicted usage data to the service orchestrations server 160 to orchestrate the customer cloud services 185 based on the predicted usage data. For example, in some embodiments, the service orchestration server 160 may turn-up one or more individual cloud services of the customer cloud services 185 automatically, based on the predicted usage data. In some embodiments, the service orchestration server 160 may be configured to turn-up one or more individual cloud services of the customer cloud services 185, without first receiving a request from the customer for the one or more individual cloud services, based on the predicted usage data. In some examples, the service orchestration server 160 may be configured to turn-up the one or more individual cloud services based on a time of day. For example, during and/or between certain times of day, one or more respective individual cloud services predicted to be used by the customer may be turned up by the service orchestration server 160. In some further embodiments, the predicted one or more individual cloud services may be turned up and made available to a predicted location from which a customer is predicted to access the predicted one or more individual cloud services. In another example, the service orchestration server 160 may be configured to automatically turn-up one or more individual services based on a predicted occurrence of an event.

In some embodiments, the turn-up process for the one or more individual cloud services may take time for respective cloud resources, such as cloud compute resources 110, third-party compute resources 125, and edge compute resources 140, to be provisioned by the service orchestration server 160 and made available to the customer at the predicted location. Accordingly, the service orchestration server 160 may, in some embodiments, turn-up the customer cloud services 185 predicted to be used by the customer such that the predicted one or more individual cloud services of the customer cloud services 185 are ready to be used by the customer at the predicted time and/or location.

In some further embodiments, the predicted usage data may further include third-party services 130 predicted to be used by a customer. Accordingly, the service orchestration server 160 may further be configured to predictively orchestrate and turn-up various third-party services 130. In yet further embodiments, the customer cloud services 185 may further include both public cloud services and private cloud platform services. Thus, the predictive model utilized by the AI pipeline 170 may further include usage data regarding private cloud services. Correspondingly, the service orchestration server 160 may further be configured to turn-up both private and public cloud service offerings automatically and predictively.

In some further embodiments, the system 100A may be configured to determine which individual customer cloud services 185 are used by a customer, and the duration that the respective customer cloud services 185 are used by the customer. Cloud service provider may, in turn, be able to bill the customer based on actual use of the customer cloud services 185, and further to bill based on cloud services that are added or removed by the customer. In some further embodiments, the cloud service provider may further be able to bill the customer for third-party services 130 based on actual use by the customer.

In various embodiments, the customer may add and/or remove services from the customer cloud services 185. Thus, the service orchestration server 160 may, in some embodiments, update the service inventory 165 to include the current customer cloud services 185 as individual cloud services are added and/or removed by the customer. The AI pipeline 170 may, in turn, be configured to update its prediction model, and in turn the predicted usage data, as individual cloud services are added/removed by the customer. Thus, in various embodiments, the AI pipeline 170 may dynamically update the prediction model and the predicted usage data from which the service orchestration server 160 may predictively orchestrate the customer cloud services 185.

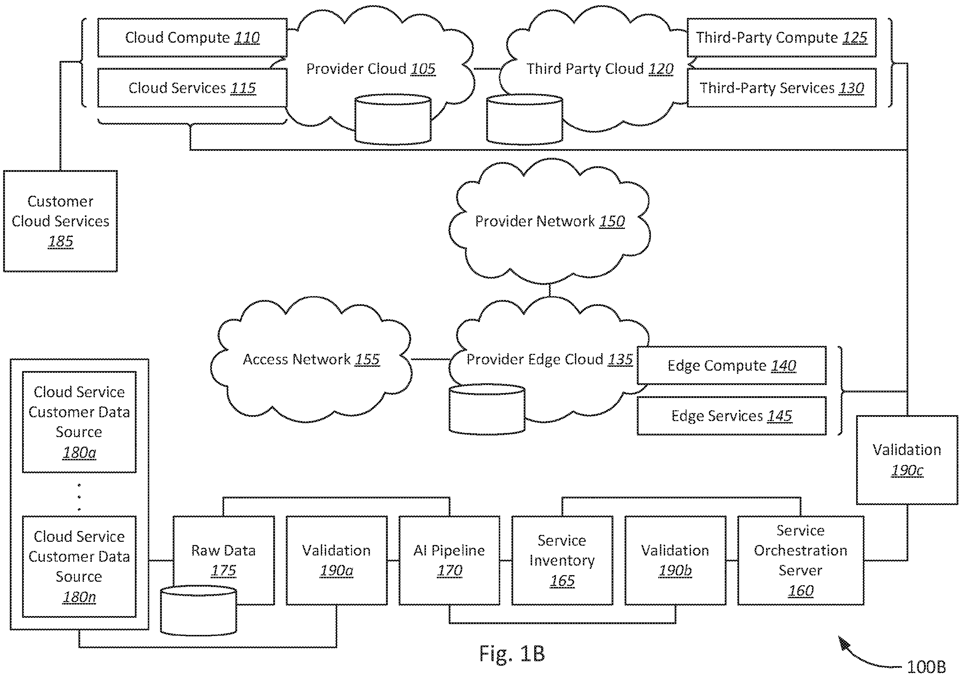

Fig. 1B is a schematic block diagram of an example architecture of a system 100B for providing secure automated on-demand cloud service turn-up. Like the system 100A of Fig. 1A, the system 100B includes a provider cloud 105 including cloud compute 110 resources and cloud services 115, third-party cloud 120 include third-party compute resources 125 and third-party services 130, a provider edge cloud 135 including edge compute resources 140 and edge services 145, provider network 150, access network 155, service orchestration server 160, service inventory 165, AI pipeline 170, raw data 175, one or more cloud service customer usage data sources 180a-180n, and customer cloud services 185. The system 100B, however, may further include validation modules 190a, 190b, 190c. It should be noted that the various components of the system 100B are schematically illustrated in Fig. 1B, and that modifications to the system 100B may be possible in accordance with various embodiments.

In various embodiments, the provider cloud 105 may be coupled to a third-party cloud 120. Each of the provider cloud 105 and third-party cloud 120 may, in turn, be coupled to a third validation module 190c, which is in turn coupled to the service orchestration server 160. The service orchestration server 160 may further be coupled, through the third validation module 190c, to a provider edge cloud 135, which may be part of and/or coupled to the provider network 150. The access network 155 may similarly be coupled to the provider edge cloud 135.

The service orchestration server 160 may further be coupled to the AI pipeline 170. The service orchestration server 160 may be coupled to and/or generate a service inventory 165, which may be provided to the AI pipeline 170. The AI pipeline 170 may also be coupled to a second validation module 190b, which may in turn be coupled to the service orchestration server 160. The AI pipeline 170 may be coupled to the one or more cloud service customer data sources 180a-180n from which the AI pipeline 170 may receive raw data 175. The one or more cloud service data sources 180a-180n may further be coupled to a first validation module 190a, which may be coupled to the AI pipeline 170. Customer cloud services 185 may be received, from the provider cloud 105, third-party cloud 120, and/or provider edge cloud 135, and in some examples, may include a set of cloud compute resources 110 and/or cloud services 115, third-party compute resources 125 and/or third-party services 130, edge compute resources 140 and/or edge services 145.

In various embodiments, the system 100B, like the system 100A, is configured to predictively turn-up cloud services based on usage data associated with the customer. In contrast with the system 100A, the system 100B, however, is further configured to validate and provide secure automated cloud service turn-up. In various embodiments, the validation modules 190a--190c may be configured to run on one or more physical and/or virtual machines. The validation modules 190a-190c may include, without limitation, hardware, software, or both hardware and software. In some embodiments, the validation modules 190a-190c may be configured to run on a dedicated machine or appliance. Accordingly, in some embodiments, the validation modules 190a-190c may each (or collectively) be implemented on a separate dedicated appliance, such as a single-board computers, programmable logic controller (PLC), application specific integrated circuits (ASIC), system on a chip (SoC), or other suitable device. In other embodiments, the validation modules 190a-190c may be logic configured to run on the service orchestration server 160, or alternatively, in some embodiments, on one or machines of the AI pipeline. In yet further embodiments, the validation modules 190a-190c may be configured to be executed remotely, such as on a remote system, or at a central office or data center associated with the provider cloud 105.

Accordingly, the first validation module 190a may be configured to validate cloud service customer data sources 180a-180n, and in turn the raw data 175 obtained by the AI pipeline 170. The process of validation may include, without limitation, confirming the origin of the customer usage data, or otherwise determining that the customer usage data should be used and/or associated with the customer.

As previously described, in some embodiments, customer usage data may be collected via the one or more cloud service customer data sources 180a-180n. Customer service customer data sources may, accordingly, include one or more edge devices, user devices, servers, databases, etc., from which customer usage data may be obtained. For example, in some embodiments, each of the cloud service customer data sources 180a-180n may correspond to a different device associated with receiving, accessing, and/or providing tire customer cloud services 185. In further examples, each of the one or more cloud service customer data sources 180a-180n may also correspond to a respective customer altogether, with the one or more cloud service customer data sources 180a-180n including customer usage data associated with a cloud service, that may be included in customer cloud services 185, but provided to a different customer. In yet further embodiments, each of the one or more cloud service customer data sources 180a-180n may correspond to respective cloud services usage data across multiple customers.

In some embodiments, the first validation module 190a may be a blockchain system configured to in which data obtained from the one or more cloud service customer data sources 180a-180n is validated as being associated with the customer (as opposed to erroneously collected and/or malicious data). For example, in some embodiments, each of the cloud service customer data sources 180a-180n, edge devices, user devices, databases, etc., may comprise nodes in the blockchain network. Accordingly, the nodes may be configured to validate whether usage data obtained from the cloud service customer data sources 180a-180n originates from or otherwise should be associated with the customer. In some examples, usage data that is not collected from the customer may still be associated with the customer. For example, usage data from customers with similar usage patterns or using the same and/or similar cloud services as the customer, may also be collected by the AI pipeline 170 from the cloud service customer data sources 180a-180n. Once the usage data / raw data 175 has been validated by the first validation module 190a, the validation module 190a may be configured to indicate to the AI pipeline 170 that the data is valid. Thus, the AI module 170 may, according to various embodiments, generate predicted usage data based on the customer usage data, in response to validation by the first validation module 190a.

In some embodiments, like the first validation module 190a, the second validation module 190b, and third validation module 190c may be a blockchain system. In various embodiments, the second validation module 190b may be configured to validate the output of the AI pipeline 170. Specifically, the second validation module 190b may be configured to validate the predicted usage data, generated by the AI pipeline 170, and transmitted to the service orchestration server 160. For example, in some embodiments, the AI pipeline 170 may comprise one or more blockchain nodes (e.g., computers in the AI pipeline 170), which may validate whether the predicted usage data originates from the AI pipeline 170 (as opposed to erroneous and/or malicious data), and in some further embodiments, is associated with the customer. The second validation module 190b may, therefore, be configured to indicate to the service orchestration server 160 that the predicted usage data is valid to use for orchestrating the respective predicted cloud services (e.g., individual cloud services of the customer cloud services 185 predicted to be used). Similarly, the service orchestration server 160, in some embodiments, may be configured to validate, via the second validation module 190b, predicted usage data received from the AI pipeline 170.

In various embodiments, the third validation module 190c may be configured to validate data that is transmitted by the service orchestration server 160 to orchestrate the various customer cloud services 185, and specifically the predicted cloud services. For example, the service orchestration server 160 may include a robotic process automation (RPA) system, which may be utilized to provision automatically various cloud compute resources 110, third-party compute resources, edge compute resources 140, and/or cloud services 115, third-party services 130, and edge services 145. Accordingly, the third validation module 190c may be configured to validate any instructions or other data transmitted, respectively, to the provider cloud 105, third-party cloud 120, and provider edge cloud 135. In some embodiments, the third validation module 190c may be configured to validate that data originates from the service orchestration server 160 (as opposed to erroneous and/or malicious data). In further embodiments, the third validation module 190c may further validate that data from the service orchestration server 160 is associated with the customer.

In this way, the system 100B may be configured to further provide a secured automated cloud service turn-up. Specifically, the validation modules 190a-190c ensure data received by the AI pipeline 170 to generate a prediction is associated with the customer, the prediction provided to the service orchestration server originates from the AI pipeline 170, and instructions to turn-up cloud services originates from the service orchestration server 160.

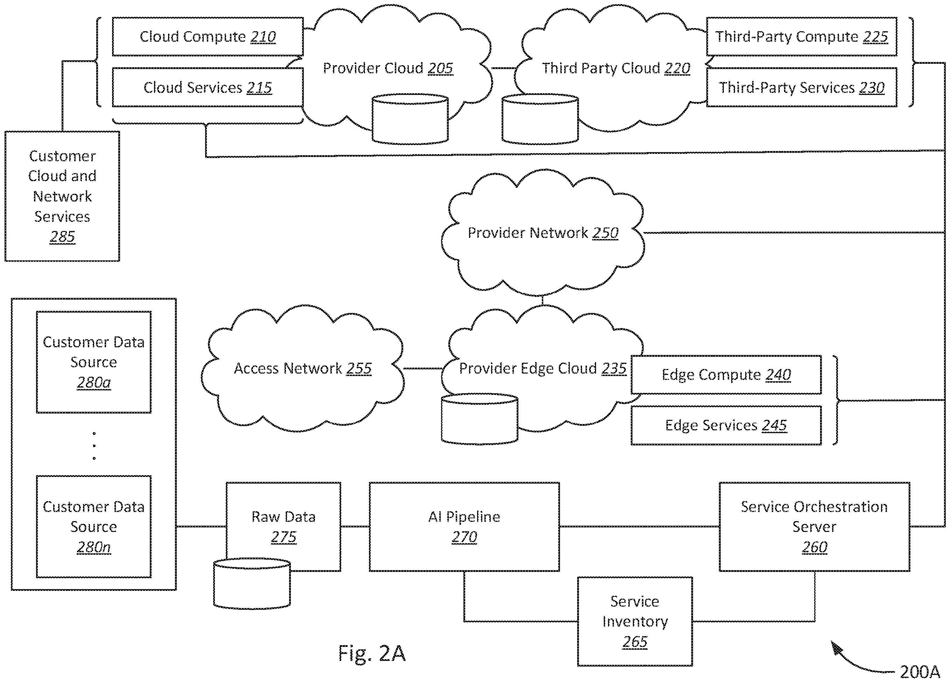

Fig. 2A is a schematic block diagram of a system 200A for providing automated on-demand software defined network and cloud service turn-up. Like the system 100A of Fig. 1A, the system 200A includes a provider cloud 205 including cloud compute 210 resources and cloud services 215, third-party cloud 220 include third-party compute resources 225 and third-party services 230, a provider edge cloud 235 including edge compute resources 240 and edge services 245, provider network 250, access network 255, service orchestration server 260, service inventory 265, artificial intelligence (AI) pipeline 270, raw data 275, one or more cloud service customer usage data sources 280a-280n, and customer cloud and network services 285. It should be noted that the various components of the system 200A are schematically illustrated in Fig. 2A, and that modifications to the system 200A may be possible in accordance with various embodiments.

In various embodiments, like the system 100A, the provider cloud 205 may be coupled to a third-party cloud 220. Each of the provider cloud 205 and third-party cloud 220 may, in turn, be coupled to the service orchestration server 260. The service orchestration server 260 may further be coupled to a provider edge cloud 235, which may be part of and/or coupled to the provider network 250. The access network 255 may similarly be coupled to the provider edge cloud 235. Furthermore, the service orchestration server 250 may further be coupled to the provider network 250.

The service orchestration server 260 may be coupled to service inventory 265, The service orchestration server 260 may further be coupled to the AI pipeline 270. The service orchestration server 260 may be coupled to and/or generate a service inventory 265, which may also be provided to the AI pipeline 270. The AI pipeline 270 may be coupled to the one or more cloud service customer data sources 280a-280n from which the Al pipeline 270 may receive raw data 275. Customer cloud and network services 285 may be received, from the provider cloud 205, third-party cloud 220, and/or provider edge cloud 235, and in some examples, may include a set of cloud compute resources 210 and/or cloud services 215, third-party compute resources 225 and/or third-party services 230, edge compute resources 240 and/or edge services 245. In various embodiments, the customer cloud and network services may further include, without limitation, one or more network services and/or network resources of the provider network 250, provided to the customer via the access network 255 associated.

In various embodiments, the provider cloud 205 may be a cloud service platform associated with a first service provider. The provider cloud 205 may include cloud compute resources 210 and may be configured to provide one or more cloud services 215 offered by the first service provider. In various embodiments, the provider cloud 205 may include a network and/or a plurality of network connected cloud compute resources 210, networking resources, and storage resources, as known to those in the art. In some embodiments, the resources of the provider cloud 205 may be accessible by a customer via a wide area network (WAN), such as the internet. In further embodiments, at least part of the provider cloud 205 may be accessible via the provider network 250. In some examples, the provider network 250 may include at least part of the provider cloud 205.

Similarly, the third-party cloud 220 may be a cloud service platform associated with a third-party cloud service provider. The third-party cloud 220 may include third-party compute resources 225 and may be configured to provide one or more third-party services. In various embodiments, like the provider cloud 205, the third-party cloud 220 may be a collection of WAN and/or internet accessible compute, storage, and networking resources, including the plurality of third-party compute resources 225, controlled by the third-party cloud service provider.

The provider edge cloud 235 may similarly be a cloud service platform associated with the first service provider. The provider edge cloud 235, however, in contrast with the provider cloud 205, may be accessible at an edge of the provider network 250. Therefore, the provider edge cloud 235 may be part of the first service provider's cloud service platform that is made available at the edge of the provider network 250. The provider edge cloud 235 may include edge compute resources 2140 and edge services 245. Each of the edge compute resources 240 and edge services 245 may be made available to the customer at the network edge. For example, in some embodiments, one or more edge devices may be configured to provide the edge resources 240 and/or one or more edge services 245. In some examples, the provider edge cloud 235 may be accessible by the customer via the access network 255. Accordingly, the provider network 250 may include at least part of the provider edge cloud 235.

In some embodiments, the provider cloud 205 may be accessed via the provider network 250. In some further embodiments, a customer connected to the provider network 250 may further access a WAN, such as the internet, through the provider network 250. Accordingly, the provider network 250 may include, without limitation, a service provider core network, backbone network, and/or the access network 255, through which the provider edge cloud 235 and/or provider cloud may be accessed by the customer. In various embodiments, the provider network 250 may also be owned or otherwise controlled by the first service provider.

In various embodiments, a customer may purchase one or more cloud services 215, third-party services 230, and/or edge services 245 from a first service provider associated with the provider cloud 205, provider edge cloud 235, and/or provider network 250, or a third-party service provider associated with the third-party cloud 220. Furthermore, the customer may purchase or otherwise receive one or more network services from the first service provider. Network services may include, for example, internet access or access to other services through the provider network 250 (e.g., voice, data, video services). According to various embodiments, the system 200A may be configured to provide the one or more cloud services 215, third-party services 230, and/or edge services 245, and to provision one or more network services to the customer on an on-demand and predictively as described below.

For example, in some embodiments, the service orchestration server 260 may be configured to provision one or more customer cloud and network services 285 from the available one or more cloud services 215 and one or more edge services 245, and/or one or more network services to provide access to the customer. In yet further embodiments, the service orchestration server 260 may be configured to provision one or more third-party services 230. For example, this may include deploying, initializing, or otherwise provisioning the cloud compute resources 210, third-party compute resources 225, edge compute resources 240, and/or any other network resources of the provider network 250 to provide the customer with customer cloud and network services 185.

Accordingly, in various embodiments, the AI pipeline 270 may be configured to be configured to collect customer usage data associated with the customer cloud and network services 285. For example, the customer cloud and network services 285 may comprise one or more individual cloud services and/or network services. Customer usage data may include, without limitation, customer location, time of day, and usage habits associated with each of the respective customer cloud and network services 285. For example, the first service provider may collect customer usage data regarding where and when each of the individual cloud services and network services are used by a customer, and usage habits of each of the one or more individual cloud services and network services.

As previously described, in some embodiments, customer usage data may be collected via the one or more customer data sources 280a-280n. Customer service customer data sources 280a-280n may, accordingly, include one or more edge devices, user devices, servers, databases, etc., from which customer usage data may be obtained. For example, in some embodiments, each of the customer data sources 280a-280n may correspond to a different device associated with receiving, accessing, and/or providing the customer cloud and network services 285. In further examples, each of the one or more customer data sources 280a-280n may also correspond to a respective customer altogether, with the one or more customer data sources 280a-280n including customer usage data associated with a cloud service and/or network service, that may be included in customer cloud and network services 285, but provided to a different customer. In yet further embodiments, each of the one or more customer data sources 280a-280n may correspond to respective cloud services usage data across multiple customers.

In some embodiments, the customer usage data may be captured from the one or more customer data sources 280a-280n as raw data 275. As will be described in greater detail below with respect to Fig. 3, and as previously described with respect to Fig. 1A, the AI pipeline 270 may be configured to process the raw data 275 to predictively determine whether and how individual cloud services of the customer cloud and network services 285 are turned up. In some further embodiments, the AI pipeline 270 may further be configured to predictively provision network services, of the customer cloud and network services 285, to the customer.

For example, as previously described, in some embodiments, the AI pipeline 270 may include, without limitation, AI and/or other machine learning (ML) logic configured to build a continuous learning model to predict network data traffic and/or cloud and network service usage. For example, as previously described, traffic and/or cloud service usage may be predicted based on several factors and a customer's usage patterns, including, without limitation, based on a geographic location, network location, time of day, and/or time of year that a customer accesses or is anticipated to access the customer cloud and network services 285. In further embodiments, the AI pipeline 170 may be configured to further predict bandwidth and/or quality of service (QoS) requirements for a respective cloud and/or network service, and in some examples, based on the service, time of day, location, etc. In some further embodiments, the continuous learning model may be configured to predict cloud service requirements based on the occurrence of external events.

In some embodiments, the AI pipeline 270 may further be configured to request or otherwise obtain a service inventory 265 from the service orchestration server 260. The service inventory 265 may include a list of cloud services available to be orchestrated by the service orchestration server 260. For example, the service inventory 265 may be configured to indicate the customer cloud and network services 285 associated with the customer, the one or more provider cloud services 215, the one or more third-party services 230, one or more edge services 245, one or more network services, and/or a combination of the above services available to be provisioned to the customer.

Accordingly, in various embodiments, the AI pipeline 270 may be configured to generate predicted usage data based on the customer usage data obtained from the one or more customer data sources 280a-280n. The predicted usage data may include both predicted usage of both cloud services and network services. Accordingly, as previously described, the AI pipeline 270 may be configured to provide the predicted usage data to the service orchestrations server 260. The service orchestration server 260 may turn-up one or more individual cloud or network services of the customer cloud and network services 285 automatically, based on the predicted usage data.

In some embodiments, the service orchestration server 260 may, in some embodiments, provision network services and/or turn-up the cloud services of the customer cloud and network services 285 predicted to be used by the customer such that the predicted one or more individual cloud and/or network services of the customer cloud and services 285 are ready to be used by the customer at the predicted time and/or location. For example, the service orchestrations server 260 may be configured to provision network services to allow a customer to access the provider network 250 to receive both network services as well as one or more individual cloud services in a predictive manner. Thus, in some embodiments, network services provided to the customer may also be provisioned automatically in a predictive manner. For example, in some embodiments, the customer may access network services from a new location not previously provisioned to receive network services from the first service provider. Thus, in some examples, the service orchestration server 260 may be configured to automatically and predictively provision services to the new location to be provided to the customer. Alternatively, network services may be provisioned on demand, when predicted to be used, and turned down when not in use by the customer. Accordingly, in some embodiments, the customer may be provisioned with and billed for only the network services that are used.

Like the system 100A, in some further embodiments, the predicted usage data may further include third-party services 230 predicted to be used by a customer. Accordingly, the service orchestration server 260 may further be configured to predictively orchestrate and turn-up various third-party services 230. In yet further embodiments, the customer cloud and network services 285 may further include both public cloud services and private cloud platform services. Thus, the predictive model utilized by the AI pipeline 270 may further include usage data regarding private cloud services. Correspondingly, the service orchestration server 260 may further be configured to turn-up both private and public cloud service offerings automatically and predictively.

In various embodiments, the customer may add and/or remove services from the customer cloud and network services 285. Thus, the service orchestration server 260 may, in some embodiments, update the service inventory 265 to include the current customer cloud and network services 285 as individual cloud and individual network services are added and/or removed by the customer. The AI pipeline 270 may, in turn, be configured to update its prediction model, and in turn the predicted usage data, as individual cloud services are added/removed by the customer. Thus, in various embodiments, the AI pipeline 270 may dynamically update the prediction model and the predicted usage data from which the service orchestration server 260 may predictively orchestrate the customer cloud and network services 285. Accordingly, in some embodiments, the predictive and automated provisioning of network services may allow a customer to access and/or be provisioned with a software defined network (SDN), which may be provisioned on an automated, and predictive basis.

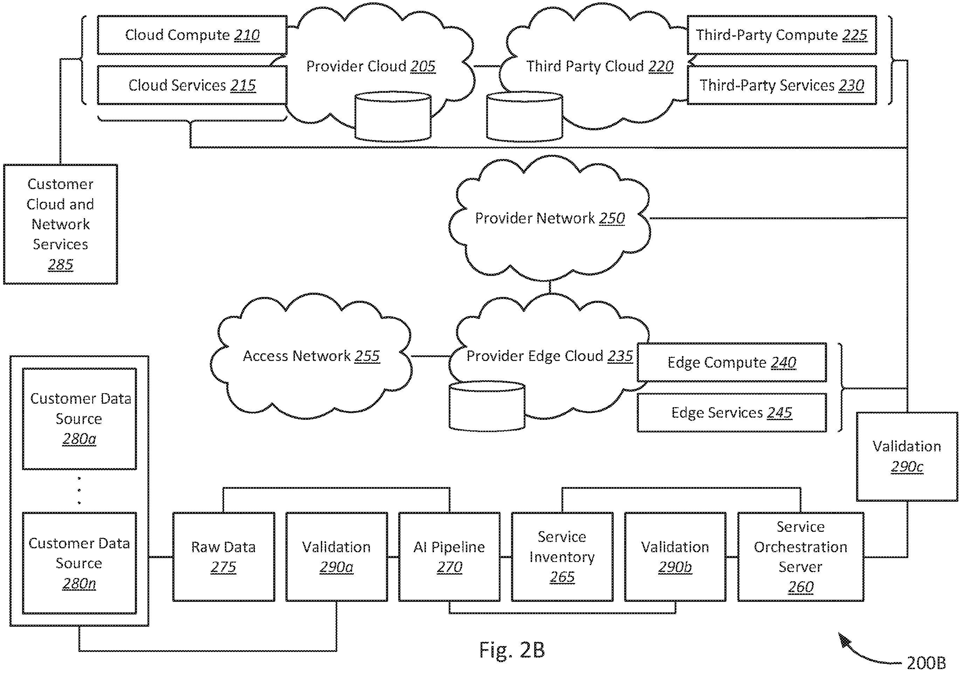

Fig. 2B is a schematic block diagram of a system 200B for providing secure automated on-demand software defined network and cloud service turn-up, in accordance with various embodiments. Like the system 200A of Fig. 2B, the system 200B includes a provider cloud 205 including cloud compute 210 resources and cloud services 215, third-party cloud 220 include third-party compute resources 225 and third-party services 230, a provider edge cloud 235 including edge compute resources 240 and edge services 245, provider network 250, access network 255, service orchestration server 260, service inventory 265, AI pipeline 270, raw data 275, one or more cloud service customer usage data sources 280a-280n, and customer cloud services 285. The system 200B, however, may further include validation modules 290a, 290b, 290c. It should be noted that the various components of the system 200B are schematically illustrated in Fig. 2B, and that modifications to the system 200B may be possible in accordance with various embodiments.

Also as in the system 200A, in various embodiments, the provider cloud 205 may be coupled to a third-party cloud 220. Each of the provider cloud 205 and third-party cloud 220 may, in turn, be coupled to the service orchestration server 260. The service orchestration server 260 may further be coupled to a provider edge cloud 235, which may be part of and/or coupled to the provider network 250. The access network 255 may similarly be coupled to the provider edge cloud 235. Furthermore, the service orchestration server 250 may further be coupled to the provider network 250.

The service orchestration server 260 may be coupled to service inventory 265, The service orchestration server 260 may further be coupled to the AI pipeline 270. The service orchestration server 260 may be coupled to and/or generate a service inventory 265, which may also be provided to the AI pipeline 270. The AI pipeline 270 may be coupled to the one or more cloud service customer data sources 280a-280n from which the AI pipeline 270 may receive raw data 275. Customer cloud and network services 285 may be received, from the provider cloud 205, third-party cloud 220, and/or provider edge cloud 235, and in some examples, may include a set of cloud compute resources 210 and/or cloud services 215, third-party compute resources 225 and/or third-party services 230, edge compute resources 240 and/or edge services 245. In various embodiments, the customer cloud and network services may further include, without limitation, one or more network services and/or network resources of the provider network 250, provided to the customer via the access network 255 associated.

In various embodiments, the system 200B, like the system 200A, is configured to predictively turn-up cloud services and/or provision network services based on usage data associated with the customer. In contrast with the system 200A, the system 200B is further configured to validate and provide secure automated cloud service turn-up and network service provisioning. In various embodiments, the validation modules 290a-290c may be configured to run on one or more physical and/or virtual machines. The validation modules 290a-290c may include, without limitation, hardware, software, or both hardware and software. In some embodiments, the validation modules 290a-290c may be configured to run on a dedicated machine or appliance. Accordingly, in some embodiments, the validation modules 290a-290c may each (or collectively) be implemented on a separate dedicated appliance, such as a single-board computer, PLCs, ASICs, SoCs, or other suitable device. In other embodiments, the validation modules 290a-290c may be logic configured to run on the service orchestration server 260, or alternatively, in some embodiments, on one or machines of the AI pipeline 270. In yet further embodiments, the validation modules 290a-290c may be configured to be executed remotely, such as or: a remote system, or at a central office or data center associated with the provider cloud 205.

Accordingly, as previously described with respect to the system 100B of Fig. 1B, the first validation module 290a may be configured to validate cloud service customer data sources 280a-280n, and in turn the raw data 275 obtained by the AI pipeline 270. The process of validation may include, without limitation, confirming the origin of the customer usage data, or otherwise determining that the customer usage data should be used and/or associated with the customer. In some embodiments, the first validation module 290a may be a blockchain system in which data obtained from the one or more cloud service customer data sources 280a-280n is validated as being associated with the customer (as opposed to erroneously collected and/or malicious data). For example, in some embodiments, each of the cloud service customer data sources 280a-280n, edge devices, user devices, databases, etc., may comprise nodes in the blockchain network. Accordingly, the nodes may be configured to validate whether usage data obtained from the cloud service customer data sources 280a-280n originates from or otherwise should be associated with the customer. Once the usage data / raw data 275 has been validated by the first validation module 290a, the validation module 290a may be configured to indicate to the AI pipeline 270 that the data is valid. Thus, the AI module 270 may, according to various embodiments, generate predicted usage data based on the customer usage data, in response to validation by the first validation module 290a.

In various embodiments, the second validation module 290b may be configured to validate the output of the AI pipeline 270. Specifically, the second validation module 290b may be configured to validate the predicted usage data, generated by the AI pipeline 270, and transmitted to the service orchestration server 260. For example, in some embodiments, the AI pipeline 270 may comprise one or more blockchain nodes (e.g., computers in the AI pipeline 270), which may validate whether the predicted usage data originates from the Al pipeline 270 (as opposed to erroneous and/or malicious data), and in some further embodiments, is associated with the customer. The second validation module 290b may, therefore, be configured to indicate to the service orchestration server 260 that the predicted usage data is valid to use for orchestrating the respective predicted cloud services (e.g., individual cloud and network services of the customer cloud and network services 285 predicted to be used). Similarly, the service orchestration server 260, in some embodiments, may be configured to validate, via the second validation module 290b, predicted usage data received from the AI pipeline 270.

In various embodiments, the third validation module 290c may be configured to validate data that is transmitted by the service orchestration server 260 to orchestrate the various customer cloud and network services 285, and specifically the predicted cloud services. For example, the service orchestration server 260 may include a RPA system, which may be utilized to provision automatically various cloud compute resources 210, third-party compute resources, edge compute resources 240, and/or cloud services 215, third-party services 230, edge services 245, and various network resources and network services of the provider network 250 and/or access network 255. Accordingly, the third validation module 290c may be configured to validate any instructions or other data transmitted, respectively, to the provider cloud 205, third-party cloud 220, provider edge cloud 235, provider network 250, and/or access network 255. In some embodiments, the third validation module 290c may be configured to validate that data originates from the service orchestration server 260 (as opposed to erroneous and/or malicious data). In further embodiments, the third validation module 290c may further validate that data from the service orchestration server 260 is associated with the customer. Thus, the system 200B may be configured to further provide a secured automated cloud service turn-up and network service provisioning.

With reference to the systems 100A, 100B, 200A, 200B, in some embodiments, the AI pipeline 170, 270 may be configured to allow customer to indicate a desired prediction accuracy of the predicted usage data. For example, the customer may indicate, to the cloud service provider / first service provider a desired prediction accuracy level. The AI pipeline 170, 270, may in turn, be configured to generate predicted usage data indicating only the predicted individual cloud services and/or network services based on the desired prediction accuracy level. In some examples, if the desired prediction accuracy may be indicative of a confidence of the AI pipeline 170, 270 that the customer will use the individual cloud service. Thus, only cloud and/or network services for which the AI pipeline 170, 270 has confidence above a threshold confidence level may be included in the predicted usage data. The lower that a prediction accuracy level is, the lower the threshold confidence level may be for the AI pipeline 170, 270 to include a cloud or network service in the predicted usage data.

Fig. 3 is a schematic block diagram of a system 300 for an artificial intelligence pipeline 301 for predictive, automated turn-up of cloud and network services, in accordance with various embodiments. The AI pipeline 301 may include several components, including acquisition and staging 303, feature engineering 305, decision support 307, and presentation 309. The AI pipeline 301 may receive usage data from equipment data sources 311 (e.g., a customer data source), via a metrics server 313, and internal data sources 315. The acquisition and staging 303 stage may include a messaging bus 317, data archive 319, and additional data 321. The feature engineering stage 305 may include data / feature engineering module 323. Decision support stage 307 may include a predictive model 325, and the presentation stage 309 may publish 327 the prediction, provide a webpage 329 with the prediction, present user actions 331, and present a dashboard 333. At each step 303-309, the AI pipeline 301 may further be configured to produce file sync data 335, raw data 337, engineered data 339, and predictions 341. It should be noted that the various components of the system 300 are schematically illustrated in Fig. 3, and that modifications to the system 300 may be possible in accordance with various embodiments.

In various embodiments, the AI pipeline 301 may be configured to receive usage data from various sources. Usage data sources may include equipment data sources 311, internal data sources 315, and/or a data archive 319. Accordingly, in the acquisition and staging 303 stage, the AI pipeline 301 may be configured to obtain and prepare usage data from the various sources. In some embodiments, usage data from the equipment data sources 311 may be obtained, by the AI pipeline 301, via a metrics server 313. Usage data may also be obtained via internal data sources 315 associated with the service provider, but external to the AI pipeline 301. The AI pipeline 301 may also include a local data archive 319 from which usage data may be obtained. In some examples, the data archive 319 may include data that was saved or otherwise persisted on a local storage device from previously obtained usage data.

In various embodiments, the AI pipeline 301 may obtain, via a messaging bus, data metrics (e.g., usage metrics and other usage data) from the metrics server 313. The messaging bus 317 may include, without limitation, a Kafka messaging bus. Accordingly, the AI pipeline 301 may be configured to receive a stream of usage data utilizing a publish / subscribe scheme. Thus, in some embodiments, each of the equipment data sources 311 may be configured to publish usage data to the metrics server 313, which may in turn publish usage data to the AI pipeline 301. During the acquisition and staging stage 303, the AI pipeline 301 may further be configured to collect additional data 321. Additional data may be obtained from internal data sources 315. In some embodiments, the additional data 321 may include data obtained from additional sources to enhance the feature data set (e.g., in addition to the usage data obtained from the metrics server 313). For example, in various embodiments, the additional data 321 may include external event data, as previously described. Thus, usage data, archived data from the data archive 319, and additional data 321 may be obtained for acquisition and staging 303 as file sync 335 data. In some embodiments, file sync 335 may be a Kafka topic to which the data may be stored and/or published for acquisition and staging 303, and from which the data may be collected.

Once the AI pipeline 301 has collected the relevant data (e.g., usage data and additional data 321 associate with the customer) for acquisition and staging 303, the relevant data may be stored and/or published as raw data 337. Accordingly, in some embodiments, raw data 337 may be a Kafka topic to which the relevant collected data is published after acquisition and staging 303. In various embodiments, the raw data 337 may then be processed by the AI pipeline 301 in the feature engineering stage 305. For example, the data / feature engineering module 323 may be configured to transform and enrich the raw data 337 to produce engineered data 339. Specifically, as known to those skilled in the art, feature engineering may include identifying, abstracting, extracting, and/or creating relevant features from the raw data 337 for processing by the predictive model 325. For example, the raw data 337 may be processed to determine relevant features, such as, without limitation, QoS data, the specific cloud and/or network services, geographic locations, network locations, time of day, time of year, etc. Thus, the feature engineering stage 305 may publish the processed data as engineered data 339.

The engineered data 339 may then be provided, in the decision support stage 307, to a predictive model 325, and in the presentation stage 309, to the dashboard 333 for display to a user and/or the customer. The predictive model 325 may, accordingly, be configured to generate predictions 342 (e.g., predicted usage data) based on the engineered data 339 (e.g., processed usage data), indicative of one or more cloud and/or network services predicted to be needed or otherwise used by a customer. The predictive model 325 may include one or more machine learning algorithms, as known to those in the art. Thus, in some embodiments, the predictive model 325 may be configured to generate predicted usage data indicative of how one or more cloud and/or network services are predicted to be used by a customer. For example, the predicted usage data may be configured to indicate the specific cloud and/or network services predicted to be used by the customer, specify predicted QoS requirements for the respective cloud and/or network services, indicate when the specific cloud and/or network services are predicted to be used, and indicate the location from which the specific cloud and/or network services are predicted to be accessed. The predicted usage data may, accordingly, be published by the predictive model 325 as predictions 341.

The predictions 341 may, in turn, be sent on to a presentation stage of the AI pipeline 301. The presentation stage 309 may include a publishing module 327, in which the predictions 341 (e.g., predicted usage data) may be published. In some embodiments, the publish module 327 may publish a stream of predictions as messages, which may be subscribed to by, for example, a service orchestration server as previously described.

The predictions 341 may, in further embodiments, also be published via a webpage 329. The web page 329 may, in some further embodiments, be configured to allow a customer to view the usage predictions 341, and to provide feedback to the predictive model 325 regarding accuracy of the predictions 341. In some embodiments, the customer may further indicate a desired prediction accuracy level to the predictive model, via the web page 329.

The predictions 341 may further be used to generate user actions 331. User actions 331 may include alerting a user (such as a system administrator, the service provider, and/or customer) to possible errors and/or issues requiring user action 331 to be addressed. For example, the predictions 341 may be used to suggest changes to the one or more cloud and/or network services used by the customer based on inefficient and/or non-usage. In some further examples, the user actions 331 presented in the presentation stage 309 may further include identifying anticipated problems with specific services. For example, based on predicted usage data, the AI pipeline 170 may be configured to indicate that a certain cloud and/or network service may not be available during a time when the customer is predicted to need the service (e.g., due to an external event such as maintenance, repair, changes in network demand and usage, etc.).

In further embodiments, both predictions 341 and engineered data 339 may be presented in the presentation stage 309 via a dashboard 333. The dashboard 333 may be configured to provide an overview of both ingestion metrics (e.g., data metrics used by the predictive model) and output metrics (e.g., prediction data, user actions, and features used by the predictive model). Thus, the dashboard 333 may be configured to allow a user or administrator to monitor and/or manage data going into the AI pipeline 301, through each of the stages 303-309 of the AI pipeline 301, and output (e.g., published) by AI pipeline 301.

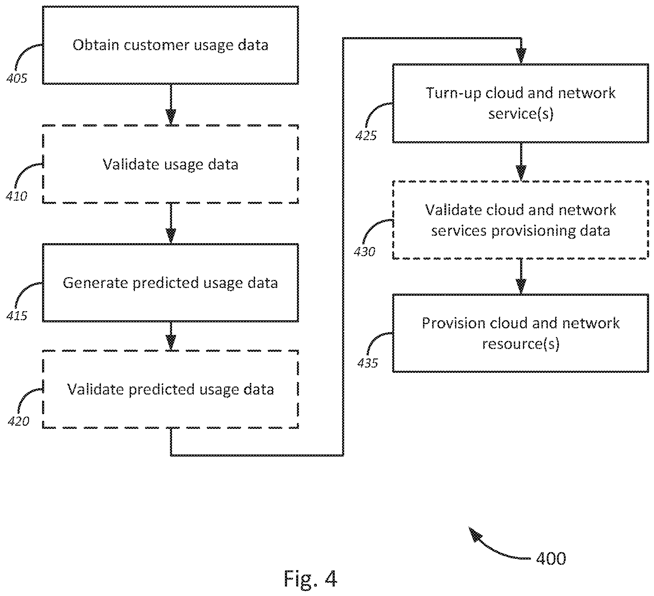

Fig. 4 is a flow diagram of a method 400 for automated on-demand network and cloud service turn-up, in accordance with various embodiments. The method 400 begins, at block 405, by obtaining, at an AI pipeline, customer usage data. The AI pipeline may include, without limitation, AI / ML logic, and underlying computer hardware (physical and/or virtual), configured to run the AI / ML logic. Thus, the AI pipeline may, in some embodiments, include one or more server computers. In various embodiments, customer usage data may be obtained, by the AI pipeline, from one or more customer data sources. As previously described, customer data sources may, accordingly, include one or more edge devices, user devices, servers, databases, etc., from which customer usage data may be obtained.

The method 400 continues, at optional block 410, by validating the usage data. For example, in some embodiments, the usage data may be validated before the data is used as part of a feature data set. As previously described, the process of validation may include, without limitation, confirming the origin of the customer usage data, or otherwise determining that the customer usage data should be used and/or associated with the customer. In some embodiments, validation may be performed using a blockchain system configured to validate data obtained from the one or more cloud service customer data sources 280a-280n as being associated with the customer (as opposed to erroneously collected and/or malicious data). For example, in some embodiments, each of the customer data sources, edge devices, user devices, databases, etc., may comprise nodes in the blockchain network. Accordingly, the nodes may be configured to validate whether the obtained usage data originates from or otherwise should be associated with the customer. In some embodiments, the validation module may be part of the AI pipeline, service orchestration server, or may in examples be a dedicated computer system separate from the Al pipeline and/or service orchestration server.

The method 400 continues, at block 415, by generating, via the AI pipeline, predicted usage data based on the customer usage data. For example, the AI pipeline may be configured to build a continuous learning model to predict network and cloud service usage. The continuous learning model may be a predictive model configured to predict cloud and network service usage by a customer based on one or more features. Accordingly, in some embodiments, the AI pipeline may be configured to identify relevant feature data from the customer usage data. The feature data sets identified by the AI pipeline may be referred to, in some embodiments, as engineered data. The engineered data may then be used by a predictive model of the AI pipeline to generate predicted usage data. Relevant feature data may include, without limitation, QoS data, the specific cloud and/or network services, geographic locations, network locations, time of day, time of year, external events, etc.

In various embodiments, predicted usage data may include, without limitation, predictions regarding one or more individual cloud and/or network services of the customer cloud and network services which are predicted to be used by a user at a respective location and/or during certain times of day. In some further embodiments, the predicted usage data may further be configured to predict cloud and network service requirements based on the occurrence of external events. In further embodiments, the AI pipeline may be configured to further predict bandwidth and/or QoS requirements for a respective cloud and/or network service, and in some examples, based on the service, time of day, location, etc. Accordingly, the predicted usage data may be configured to predict the cloud and network service needs of a customer. As previously described, in some embodiments, the predictive model may consider, in addition to historic customer usage data, historic usage data from other customers, historic usage data for other cloud or network services, expected future conditions, and expected future external events.

At optional block 420, the method 400 continues by validating the predicted usage data. In various embodiments, a second validation module may be configured to validate the output of the AI pipeline. Specifically, the second validation module may be configured to validate the predicted usage data, generated by the AI pipeline. As previously described, the second validation module may be part of a blockchain system, which may further be part of the AI pipeline and/or service orchestration server, or implemented as a dedicated system separate from the AI pipeline and/or service orchestration server. The second validation module may be configured to validate that the predicted usage data originates from the AI pipeline, as opposed to erroneously or maliciously generated data. Thus, the second validation module may be configured to indicate to the service orchestration server that the predicted usage data is valid to use for orchestrating the respective predicted cloud services (e.g., individual cloud and network services of the customer cloud and network services predicted to be used).

At block 425, the method 400 may continue by turning-up, via a service orchestration server, one or more cloud and network services based on the predicted usage data. In various embodiments, the AI pipeline may be configured to provide the predicted usage data to the service orchestrations server to orchestrate one or more individual cloud and/or network services based on the predicted usage data. For example, in some embodiments, the service orchestration server may turn-up one or more individual cloud and/or network services automatically, based on the predicted usage data. In some embodiments, the service orchestration server may be configured to turn-up one or more individual cloud and/or network services predictively, without first receiving a request from the customer for the one or more individual cloud services, based on the predicted usage data. In some examples, the service orchestration server may be configured to turn-up the one or more individual cloud services based on a time of day. For example, during and/or between certain times of day, one or more respective individual cloud services predicted to be used by the customer may be turned up by the service orchestration server. In some further embodiments, the predicted one or more individual cloud and/or network services may be turned up and made available to a predicted location from which a customer is predicted to access the predicted one or more individual cloud and/or network services. In another example, the service orchestration server may be configured to automatically turn-up one or more individual cloud and/or services based on a predicted occurrence of an event. In further examples, the service orchestration server may be configured to provide a predicted QoS with the respective one or more individual cloud and/or network services, according to the predicted usage data.

In some embodiments, the turn-up process for the one or more individual cloud services may include causing cloud compute resources, third-party resources, edge resources, and network resources to be provisioned by respective provisioning systems. Accordingly, the orchestration server may be configured to cause the cloud and/or network services and associated cloud and/or network resources to be provisioned by respective provisioning systems, via request or command to the respective provisioning systems.

At block 430, the method 400 continues by optionally validating the cloud and network services provisioning data. In various embodiments, cloud and network services provisioning data may be validated via a third validation module. As previously described, like the first and second validation modules, the third validation module may be part of a blockchain system. The third validation module may be configured to validate that the cloud and/or network services provisioning data originates from the correct RPA system (e.g., the service orchestration server). Thus, the third validation module may validate that the request and/or command to turn-up the cloud and/or network services, and corresponding request and/or command to turn-up respectively associated cloud and/or network resources needed to provide the cloud and/or network services, originates from a trusted source, such as the service orchestration server. At block 435, the respective provisioning systems, as known to those in the art, may provision the cloud and/or network resources as indicated by the service orchestrations server to provide the respective cloud and/or network services to the customer.

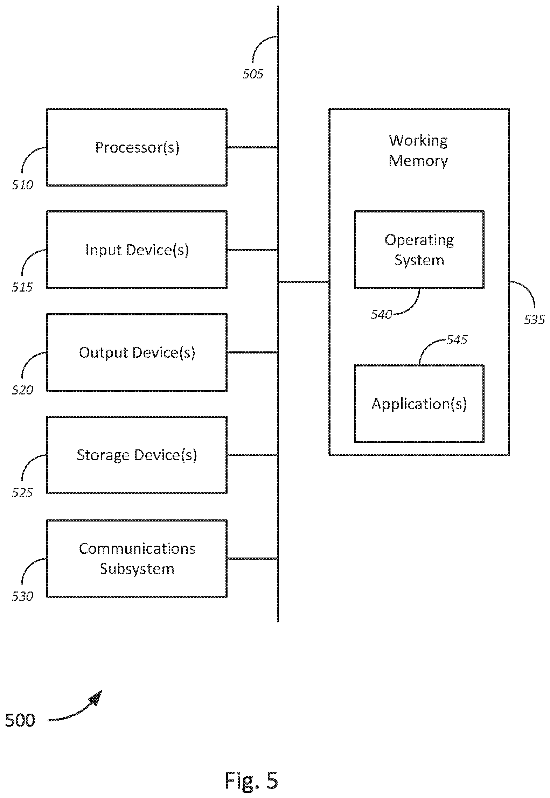

Fig. 5 is a schematic block diagram of a computer system 500 for an automated on-demand network and cloud service turn-up, in accordance with various embodiments. The computer system 500 is a schematic illustration of a computer system (physical and/or virtual), such as a service orchestration server, an AI pipeline computer, and/or a customer data source, which may perform the methods provided by various other embodiments, as described herein. It should be noted that Fig. 5 only provides a generalized illustration of various components, of which one or more of each may be utilized as appropriate. Fig. 5, therefore, broadly illustrates how individual system elements may be implemented in a relatively separated or relatively more integrated manner.

The computer system 500 includes multiple hardware (or virtualized) elements that may be electrically coupled via a bus 505 (or may otherwise be in communication, as appropriate). The hardware elements may include one or more processors 510, including, without limitation, one or more general-purpose processors and/or one or more special-purpose processors (such as microprocessors, digital signal processing chips, graphics acceleration processors, and microcontrollers); one or more input devices 515, which include, without limitation, a mouse, a keyboard, one or more sensors, and/or the like; and one or more output devices 520, which can include, without limitation, a display device, and/or the like.

The computer system 500 may further include (and/or be in communication with) one or more storage devices 525, which can comprise, without limitation, local and/or network accessible storage, and/or can include, without limitation, a disk drive, a drive array, an optical storage device, solid-state storage device such as a random-access memory ("RAM") and/or a read-only memory ("ROM"), which can be programmable, flash-updateable, and/or the like. Such storage devices may be configured to implement any appropriate data stores, including, without limitation, various file systems, database structures, and/or the like.

The computer system 500 may also include a communications subsystem 530, which may include, without limitation, a modem, a network card (wireless or wired), an IR communication device, a wireless communication device and/or chipset (such as a Bluetooth^{™} device, an 802.11 device, a WiFi device, a WiMax device, a WWAN device, a low-power (LP) wireless device, a Z-Wave device, a ZigBee device, cellular communication facilities, etc.). The communications subsystem 530 may permit data to be exchanged with a network (such as the network described below, to name one example), with other computer or hardware systems, between data centers or different cloud platforms, and/or with any other devices described herein. In many embodiments, the computer system 500 further comprises a working memory 535, which can include a RAM or ROM device, as described above.

The computer system 500 also may comprise software elements, shown as being currently located within the working memory 535, including an operating system 540, device drivers, executable libraries, and/or other code, such as one or more application programs 545, which may comprise computer programs provided by various embodiments, and/or may be designed to implement methods, and/or configure systems, provided by other embodiments, as described herein. Merely by way of example, one or more procedures described with respect to the method(s) discussed above may be implemented as code and/or instructions executable by a computer (and/or a processor within a computer); in an aspect, then, such code and/or instructions can be used to configure and/or adapt a general purpose computer (or other device) to perform one or more operations in accordance with the described methods.

A set of these instructions and/or code may be encoded and/or stored on a non-transitory computer readable storage medium, such as the storage device(s) 525 described above. In some cases, the storage medium may be incorporated within a computer system, such as the system 500. In other embodiments, the storage medium may be separate from a computer system (i.e., a removable medium, such as a compact disc, etc.), and/or provided in an installation package, such that the storage medium can be used to program, configure, and/or adapt a general purpose computer with the instructions/code stored thereon. These instructions may take the form of executable code, which is executable by the computer system 500 and/or may take the form of source and/or installable code, which, upon compilation and/or installation on the computer system 500 (e.g., using any of a variety of generally available compilers, installation programs, compression/decompression utilities, etc.) then takes the form of executable code.

It will be apparent to those skilled in the art that substantial variations may be made in accordance with specific requirements. For example, customized hardware (such as programmable logic controllers, single board computers, FPGAs, ASICs, and SoCs) may also be used, and/or particular elements may be implemented in hardware, software (including portable software, such as applets, etc.), or both. Further, connection to other computing devices such as network input/output devices may be employed.

As mentioned above, in one aspect, some embodiments may employ a computer or hardware system (such as the computer system 500) to perform methods in accordance with various embodiments of the invention. According to a set of embodiments, some or all of the procedures of such methods are performed by the computer system 500 in response to processor 510 executing one or more sequences of one or more instructions (which may be incorporated into the operating system 540 and/or other code, such as an application program 545 or firmware) contained in the working memory 535. Such instructions may be read into the working memory 535 from another computer readable medium, such as one or more of the storage device(s) 525. Merely by way of example, execution of the sequences of instructions contained in the working memory 535 may cause the processor(s) 510 to perform one or more procedures of the methods described herein.

The terms "machine readable medium" and "computer readable medium," as used herein, refer to any medium that participates in providing data that causes a machine to operate in a specific fashion. In an embodiment implemented using the computer system 500, various computer readable media may be involved in providing instructions/code to processor(s) 510 for execution and/or may be used to store and/or carry such instructions/code (e.g., as signals). In many implementations, a computer readable medium is a non--transitory, physical, and/or tangible storage medium. In some embodiments, a computer readable medium may take many forms, including, but not limited to, non-volatile media, volatile media, or the like. Non-volatile media includes, for example, optical and/or magnetic disks, such as the storage device(s) 525. Volatile media includes, without limitation, dynamic memory, such as the working memory 535. In some alternative embodiments, a computer readable medium may take the form of transmission media, which includes, without limitation, coaxial cables, copper wire and fiber optics, including the wires that comprise the bus 505, as well as the various components of the communication subsystem 530 (and/or the media by which the communications subsystem 530 provides communication with other devices). In an alternative set of embodiments, transmission media can also take the form of waves (including, without limitation, radio, acoustic, and/or light waves, such as those generated during radio-wave and infra-red data communications).

Common forms of physical and/or tangible computer readable media include, for example, a floppy disk, a flexible disk, a hard disk, magnetic tape, or any other magnetic medium, a CD-ROM, any other optical medium, punch cards, paper tape, any other physical medium with patterns of holes, a RAM, a PROM, and EPROM, a FLASH-EPROM, any other memory chip or cartridge, a carrier wave as described hereinafter, or any other medium from which a computer can read instructions and/or code.

Various forms of computer readable media may be involved in carrying one or more sequences of one or more instructions to the processor(s) 510 for execution. Merely by way of example, the instructions may initially be carried on a magnetic disk and/or optical disc of a remote computer. A remote computer may load the instructions into its dynamic memory and send the instructions as signals over a transmission medium to be received and/or executed by the computer system 500. These signals, which may be in the form of electromagnetic signals, acoustic signals, optical signals, and/or the like, are all examples of carrier waves on which instructions can be encoded, in accordance with various embodiments of the invention.

The communications subsystem 530 (and/or components thereof) generally receives the signals, and the bus 505 then may carry the signals (and/or the data, instructions, etc. carried by the signals) to the working memory 535, from which the processor(s) 510 retrieves and executes the instructions. The instructions received by the working memory 535 may optionally be stored on a storage device 525 either before or after execution by the processor(s) 510.

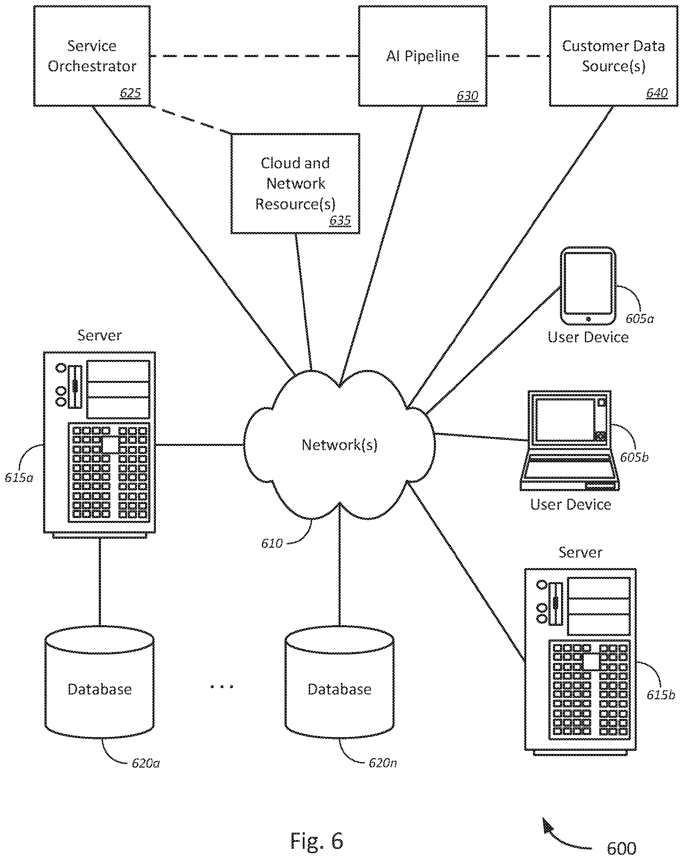

Fig. 6 is a schematic block diagram illustrating system of networked computer devices, in accordance with various embodiments. The system 600 may include one or more user devices 605. A user device 605 may include, merely by way of example, desktop computers, single-board computers, tablet computers, laptop computers, handheld computers, edge devices, and the like, running an appropriate operating system. User devices 605 may further include external devices, remote devices, servers, and/or workstation computers running any of a variety of operating systems. A user device 605 may also have any of a variety of applications, including one or more applications configured to perform methods provided by various embodiments, as well as one or more office applications, database client and/or server applications, and/or web browser applications. Alternatively, a user device 605 may include any other electronic device, such as a thin-client computer, Internet-enabled mobile telephone, and/or personal digital assistant, capable of communicating via a network (*e.g.,* the network(s) 610 described below) and/or of displaying and navigating web pages or other types of electronic documents. Although the exemplary system 600 is shown with two user devices 605a-605b, any number of user devices 605 may be supported.

Certain embodiments operate in a networked environment, which can include a network(s) 610. The network(s) 610 can be any type of network familiar to those skilled in the art that can support data communications, such as an access network, core network, or cloud network, and use any of a variety of commercially-available (and/or free or proprietary) protocols, including, without limitation, MQTT, CoAP, AMQP, STOMP, DDS, SCADA, XMPP, custom middleware agents, Modbus, BACnet, NCTIP, Bluetooth, Zigbee / Z-wave, TCP/IP, SNA^{™}, IPX^{™}, and the like. Merely by way of example, the network(s) 610 can each include a local area network ("LAN"), including, without limitation, a fiber network, an Ethernet network, a Token-Ring^{™} network and/or the like; a wide-area network ("WAN"); a wireless wide area network ("WWAN"); a virtual network, such as a virtual private network ("VPN"); the Internet; an intranet; an extranet; a public switched telephone network ("PSTN"); an infra-red network; a wireless network, including, without limitation, a network operating under any of the IEEE 802.11 suite of protocols, the Bluetooth^{™} protocol known in the art, and/or any other wireless protocol; and/or any combination of these and/or other networks. In a particular embodiment, the network may include an access network of the service provider (e.g., an Internet service provider ("ISP")). In another embodiment, the network may include a core network of the service provider, backbone network, cloud network, management network, and/or the Internet.

Embodiments can also include one or more server computers 615. Each of the server computers 615 may be configured with an operating system, including, without limitation, any of those discussed above, as well as any commercially (or freely) available server operating systems. Each of the servers 615 may also be running one or more applications, which can be configured to provide services to one or more clients 605 and/or other servers 615.

Merely by way of example, one of the servers 615 may be a data server, a web server, orchestration server, authentication server (e.g., TACACS, RADIUS, etc.), cloud computing device(s), or the like, as described above. The data server may include (or be in communication with) a web server, which can be used, merely by way of example, to process requests for web pages or other electronic documents from user computers 605. The web server can also run a variety of server applications, including HTTP servers, FTP servers, CGI servers, database servers, Java servers, and the like. In some embodiments of the invention, the web server may be configured to serve web pages that can be operated within a web browser on one or more of the user computers 605 to perform methods of the invention.

The server computers 615, in some embodiments, may include one or more application servers, which can be configured with one or more applications, programs, web-based services, or other network resources accessible by a client. Merely by way of example, the server(s) 615 can be one or more general purpose computers capable of executing programs or scripts in response to the user computers 605 and/or other servers 615, including, without limitation, web applications (which may, in some cases, be configured to perform methods provided by various embodiments). Merely by way of example, a web application can be implemented as one or more scripts or programs written in any suitable programming language, such as Java^{™}, C, C#^{™} or C++, and/or any scripting language, such as Perl, Python, or TCL, as well as combinations of any programming and/or scripting languages. The application server(s) can also include database servers, including, without limitation, those commercially available from Oracle^{™}, Microsoft^{™}, Sybase^{™}, IBM^{™}, and the like, which can process requests from clients (including, depending on the configuration, dedicated database clients, API clients, web browsers, etc.) running on a user computer, user device, or customer device 605 and/or another server 615.

In accordance with further embodiments, one or more servers 615 can function as a file server and/or can include one or more of the files (e.g., application code, data files, etc.) necessary to implement various disclosed methods, incorporated by an application running on a user computer 605 and/or another server 615. Alternatively, as those skilled in the art will appreciate, a file server can include all necessary files, allowing such an application to be invoked remotely by a user computer, user device, or customer device 605 and/or server 615.

It should be noted that the functions described with respect to various servers herein (e.g., application server, database server, web server, file server, etc.) can be performed by a single server and/or a plurality of specialized servers, depending on implementation-specific needs and parameters.

In certain embodiments, the system can include one or more databases 620a--620n (collectively, "databases 620"). The location of each of the databases 620 is discretionary: merely by way of example, a database 620a may reside on a storage medium local to (and/or resident in) a server 615a (or alternatively, user device 605). Alternatively, a database 620n can be remote so long as it can be in communication (e.g., via the network 610) with one or more of these. In a particular set of embodiments, a database 620 can reside in a storage-area network ("SAN") familiar to those skilled in the art. In one set of embodiments, the database 620 may be a relational database configured to host one or more data lakes collected from various data sources. The databases 620 may include SQL, no-SQL, and/or hybrid databases, as known to those in the art. The database may be controlled and/or maintained by a database server.

The system 600 may further include a service orchestrator 625, AI pipeline 630, cloud and network resources 635, and one or more customer data sources 640. The service orchestrator 625 may include a service orchestration server as previously described. In various embodiments, the service orchestrator 625 may be coupled, via the network 610, to the AI pipeline 630 and one or more cloud and network resources 635. Alternatively, in some embodiments, the service orchestrator 625 may be directly coupled to the Al pipeline 630 or in some cases may include at least part of the AI pipeline 630. Similarly, the service orchestrator 625 may alternatively be coupled directly to one or more cloud and network resources 635. The Al pipeline 630, cloud and network resources 635, and one or more customer data sources 640 may similarly be coupled to the network 610. The AI Pipeline 630 may further be coupled directly to, or in some examples include the one or more customer data sources 640.

As previously described, the AI pipeline 630 may be configured to obtain customer usage data from the one or more customer data sources 640, which may include one or more of the user devices 605. The AI pipeline 630 may be configured to generate predicted usage data, which may eb provided by the AI pipeline to the service orchestrator 625. The service orchestrator 625 may be configured to provision one or more cloud services and turn-up one or more cloud services based on the predicted usage data. In some embodiments, this may include turn-up of one or more cloud and network resources 635 to provide the services indicated by the predicted usage data.

## Claims

1. A system comprising:
an artificial intelligence, AI,
pipeline (170, 270, 301, 630) comprising:
a processor configured to:
receive, from a user input, a prediction accuracy level provided by a customer;
obtain, via one or more customer data sources, customer usage data associated with the customer from the one or more customer data sources (180, 280), wherein the customer usage data is indicative of usage patterns of a plurality of cloud services (185, 285) used by the customer;
generate, via a predictive model, predicted usage data based on the customer usage data, wherein the predicted usage data includes a prediction of an individual cloud service of the plurality of cloud services predicted to be used by the customer, and wherein the prediction of the individual cloud service is based on the prediction accuracy level;
publish the predicted usage data; and
a service orchestration server (160, 260) coupled to the AI pipeline, the service orchestration server configured to obtain the predicted usage data from the AI pipeline, and turn-up the individual cloud service based on the predicted usage data.

2. The system of claim 1, wherein the customer usage data further includes usage patterns of one or more network services by the customer, wherein the predicted usage data further includes prediction of an individual network service of the one or more network services predicted to be used by the customer, and wherein the service orchestration server is further configured to provision the individual network service based on the predicted usage data.; and
optionally wherein turning-up the individual cloud service includes provisioning one or more cloud resources required to provide the individual cloud service, and wherein provisioning the individual network service includes provisioning one or more network resources required to provide the individual network service.

3. The system of claim 1, wherein the processor is configured to:
identify feature data of the customer usage data configured to be used by the predictive model to generate the predicted usage data, wherein the feature data includes one or more features of the usage patterns.

4. The system of claim 3, wherein the feature data includes either:
(i) at least one of a location and time that each of the plurality of cloud services are respectively used by the customer; or
(ii) at least one of a quality of service requirement and bandwidth requirement for each of the plurality of cloud services.

5. The system of claim 1, wherein the processor is configured to:
obtain external event data indicative of the occurrence of an external event expected to occur in the future or that has historically occurred;
wherein the customer usage data reflects usage data during the external event; and
wherein the predicted usage data further includes a prediction of an individual cloud service predicted to be used based on the occurrence of the external event.

6. The system of claim 1 further comprising a blockchain system coupled to the AI pipeline, wherein the blockchain system is configured to validate (190a, 290a) that the customer usage data originates from the customer; and
optionally wherein the blockchain system is further configured to validate (190b, 290b) that the predicted usage data originates from the AI pipeline; and
further optionally wherein the blockchain system is further configured to validate (190c, 290c) that instructions to turn-up the individual cloud service originates from the service orchestration server.

7. A computer program comprising instructions which, when executed by a processor, cause the processor to:
receive, from a user input, a prediction accuracy level provided by a customer;
obtain, via an AI pipeline (170, 270, 301, 630), customer usage data associated with the customer from one or more customer data sources (180, 280), wherein the customer usage data is indicative of usage patterns of a plurality of cloud services (185, 285) used by the customer;
generate, via the AI pipeline, predicted usage data based on the customer usage data, wherein the predicted usage data includes a prediction of an individual cloud service of the plurality of cloud services predicted by a predictive model to be used by the customer, and wherein the prediction of the individual cloud service is based on the prediction accuracy level;
publish, via the AI pipeline, the predicted usage data;
obtain the predicted usage data from the AI pipeline; and
turn-up the individual cloud service based on the predicted usage data.

8. The computer program of claim 7, wherein the customer usage data further includes usage patterns of one or more network services by the customer, wherein the predicted usage data further includes prediction of an individual network service of the one or more network services predicted to be used by the customer, and wherein the instructions are further executable by the processor to provision, via the service orchestration server, the individual network service based on the predicted usage data; and
optionally wherein turning-up the individual cloud service includes provisioning one or more cloud resources required to provide the individual cloud service, and wherein provisioning the individual network service includes provisioning one or more network resources required to provide the individual network service.

9. The computer program of claim 7, wherein the instructions are further executable by the processor to:
identify, via the AI pipeline, feature data of the customer usage data configured to be used by the predictive model to generate the predicted usage data, wherein the feature data includes one or more features of the usage patterns; and
optionally wherein the feature data includes at least one of a location that each of the one or more cloud services are respectively used by the customer, time that each of the one or more cloud services are respectively used by the customer, quality of service requirement for each of the one or more cloud services, and bandwidth requirement for each of the one or more cloud services.

10. The computer program of claim 7, wherein the instructions are further executable by the processor to:
obtain, via the AI pipeline, external event data indicative of the occurrence of an external event expected to occur in the future or that has historically occurred;
wherein the customer usage data reflects usage data during the external event; and
wherein the predicted usage data further includes a prediction of an individual cloud service predicted to be used based on the occurrence of the external event.

11. The computer program of claim 7, wherein the instructions are further executable by the processor to:
validate (190a, 290a), via a blockchain system, that the customer usage data originates from the customer;
validate(190b, 290b), via the blockchain system, that the predicted usage data originates from the AI pipeline; and
validate (190c, 290c), via the blockchain system, that instructions to turn-up the individual cloud service originates from the service orchestration server.

12. A computer-readable medium having stored thereon the computer program of any one of claims 7-11.

13. A method (400) comprising:
receiving, from a user input, a prediction accuracy level provided by a customer;
obtaining (405), via an AI pipeline (170, 270, 301, 630), customer usage data associated with the customer from one or more customer data sources (180, 280), wherein the customer usage data is indicative of usage patterns of a plurality of cloud services (185, 285) used by the customer;
generating (415), via the AI pipeline, predicted usage data based on the customer usage data, wherein the predicted usage data includes a prediction of an individual cloud service of the plurality of cloud services predicted by a predictive model to be used by the customer, and wherein the prediction of the individual cloud service is based on the prediction accuracy level;
publishing, via the AI pipeline, the predicted usage data;
obtaining, via a service orchestration server (160, 260), the predicted usage data from the AI pipeline; and
turning-up (425), via the service orchestration server, the individual cloud service based on the predicted usage data.

14. The method of claim 13, wherein the customer usage data further includes usage patterns of one or more network services by the customer, wherein the predicted usage data further includes prediction of an individual network service of the one or more network services predicted to be used by the customer, the method further comprising:
provisioning (435), via the service orchestration server, the individual network service based on the predicted usage data;
wherein turning-up the individual cloud service includes provisioning one or more cloud resources required to provide the individual cloud service, and wherein provisioning the individual network service includes provisioning one or more network resources required to provide the individual network service.

15. The method of claim 13 further comprising:
Validating (190a, 290a), via a blockchain system, that the customer usage data originates from the customer;
Validating (190b, 290b), via the blockchain system, that the predicted usage data originates from the AI pipeline; and
Validating (190c, 290c), via the blockchain system, that instructions to turn-up the individual cloud service originates from the service orchestration server.

## Patentansprüche

1. System, Folgendes umfassend:
eine Pipeline (170, 270, 301, 630) einer künstlichen Intelligenz, KI, Folgendes umfassend:
einen Prozessor, der dafür konfiguriert ist:
von einer Benutzereingabe einen durch einen Kunden bereitgestellten Vorhersagegenauigkeitsgrad zu empfangen;
über eine oder mehrere Kundendatenquellen dem Kunden zugeordnete Kundennutzungsdaten aus der einen oder den mehreren Kundendatenquellen (180, 280) zu erlangen, wobei die Kundennutzungsdaten Nutzungsmuster einer Vielzahl von durch den Kunden verwendeten Cloud-Diensten (185, 285) angeben;
über ein Vorhersagemodell auf der Grundlage der Kundennutzungsdaten vorhergesagte Nutzungsdaten zu erzeugen, wobei die vorhergesagten Nutzungsdaten eine Vorhersage eines einzelnen Cloud-Dienstes der Vielzahl von Cloud-Diensten, von dem vorhergesagt wird, dass er durch den Kunden verwendet wird, einschließen, und
wobei die Vorhersage des einzelnen Cloud-Dienstes auf dem Vorhersagegenauigkeitsgrad basiert;
die vorhergesagten Nutzungsdaten zu veröffentlichen; und
einen Dienstorchestrierungsserver (160, 260), der mit der KI-Pipeline gekoppelt ist, wobei der Dienstorchestrierungsserver dafür konfiguriert ist, die vorhergesagten Nutzungsdaten von der KI-Pipeline zu erlangen, und den einzelnen Cloud-Dienst auf der Grundlage der vorhergesagten Nutzungsdaten zu aktivieren.

2. System nach Anspruch 1, wobei die Kundennutzungsdaten ferner Nutzungsmuster von einem oder mehreren Netzwerkdiensten durch den Kunden einschließen,
wobei die vorhergesagten Nutzungsdaten ferner eine Vorhersage eines einzelnen Netzwerkdienstes des einen oder der mehreren Netzwerkdienste einschließen, von dem vorhergesagt wird, dass er durch den Kunden verwendet wird,
und wobei der Dienstorchestrierungsserver ferner dafür konfiguriert ist, den einzelnen Netzwerkdienst auf der Grundlage der vorhergesagten Nutzungsdaten bereitzuhalten; und
optional wobei das Aktivieren des einzelnen Cloud-Dienstes das Bereithalten einer oder mehrerer Cloud-Ressourcen, die benötigt werden, um den einzelnen Cloud-Dienst bereitzustellen, einschließt, und wobei das Bereithalten des einzelnen Netzwerkdienstes das Bereithalten einer oder mehrerer Netzwerkressourcen, die benötigt werden, um den einzelnen Netzwerkdienst bereitzustellen, einschließt.

3. System nach Anspruch 1, wobei der Prozessor dafür konfiguriert ist:
Merkmalsdaten der Kundennutzungsdaten zu identifizieren, die dafür konfiguriert sind, durch das Vorhersagemodell verwendet zu werden, um die vorhergesagten Nutzungsdaten zu erzeugen, wobei die Merkmalsdaten ein oder mehrere Merkmale der Nutzungsmuster einschließen.

4. System nach Anspruch 3, wobei die Merkmalsdaten Folgendes einschließen:
(i) entweder mindestens eines von einem Ort und einer Zeit, an dem bzw. zu der jeder der Vielzahl von Cloud-Diensten jeweils durch den Kunden verwendet wird; oder
(ii) mindestens eines von einer Dienstgüteanforderung und einer Bandbreitenanforderung für jeden der Vielzahl von Cloud-Diensten.

5. System nach Anspruch 1, wobei der Prozessor dafür konfiguriert ist:
externe Ereignisdaten zu erlangen, die das Auftreten eines externen Ereignisses angeben, dessen Auftreten in der Zukunft erwartet wird oder das in der Vergangenheit aufgetreten ist;
wobei die Kundennutzungsdaten Nutzungsdaten während des externen Ereignisses widerspiegeln; und
wobei die vorhergesagten Nutzungsdaten ferner eine Vorhersage eines einzelnen Cloud-Dienstes einschließen, von dem vorhergesagt wird, dass er auf der Grundlage des Auftretens des externen Ereignisses verwendet wird.

6. System nach Anspruch 1, ferner ein Blockchain-System umfassend, das mit der KI-Pipeline gekoppelt ist, wobei das Blockchain-System dafür konfiguriert ist, zu validieren (190a, 290a), dass die Kundennutzungsdaten von dem Kunden stammen; und
optional wobei das Blockchain-System ferner dafür konfiguriert ist, zu validieren (190b, 290b), dass die vorhergesagten Nutzungsdaten von der KI-Pipeline stammen; und
ferner optional wobei das Blockchain-System ferner dafür konfiguriert ist, zu validieren (190c, 290c), dass Anweisungen, den einzelnen Cloud-Dienst zu aktivieren, vom Dienstorchestrierungsserver stammen.

7. Computerprogramm, Anweisungen umfassend, die, wenn sie durch einen Prozessor ausgeführt werden, den Prozessor dazu veranlassen:
von einer Benutzereingabe einen durch einen Kunden bereitgestellten Vorhersagegenauigkeitsgrad zu empfangen;
über eine KI-Pipeline (170, 270, 301, 630) dem Kunden zugeordnete Kundennutzungsdaten aus einer oder mehreren Kundendatenquellen (180, 280) zu erlangen, wobei die Kundennutzungsdaten Nutzungsmuster einer Vielzahl von durch den Kunden verwendeten Cloud-Diensten (185, 285) angeben;
über die KI-Pipeline vorhergesagte Nutzungsdaten auf der Grundlage der Kundennutzungsdaten zu erzeugen, wobei die vorhergesagten Nutzungsdaten eine Vorhersage eines einzelnen Cloud-Dienstes der Vielzahl von Cloud-Diensten einschließen, von dem durch ein Vorhersagemodell vorhergesagt wird, dass er durch den Kunden verwendet wird, und wobei die Vorhersage des einzelnen Cloud-Dienstes auf dem Vorhersagegenauigkeitsgrad basiert;
die vorhergesagten Nutzungsdaten über die KI-Pipeline zu veröffentlichen;
die vorhergesagten Nutzungsdaten von der KI-Pipeline zu erlangen, und
den einzelnen Cloud-Dienst auf der Grundlage der vorhergesagten Nutzungsdaten zu aktivieren.

8. Computerprogramm nach Anspruch 7, wobei die Kundennutzungsdaten ferner Nutzungsmuster von einem oder mehreren Netzwerkdiensten durch den Kunden einschließen,
wobei die vorhergesagten Nutzungsdaten ferner eine Vorhersage eines einzelnen Netzwerkdienstes des einen oder der mehreren Netzwerkdienste einschließen, von dem vorhergesagt wird, dass er durch den Kunden verwendet wird,
und wobei die Anweisungen ferner durch den Prozessor ausführbar sind, um den einzelnen Netzwerkdienst auf der Grundlage der vorhergesagten Nutzungsdaten über den Dienstorchestrierungsserver bereitzuhalten; und
optional wobei das Aktivieren des einzelnen Cloud-Dienstes das Bereithalten einer oder mehrerer Cloud-Ressourcen, die benötigt werden, um den einzelnen Cloud-Dienst bereitzustellen, einschließt, und wobei das Bereithalten des einzelnen Netzwerkdienstes das Bereithalten einer oder mehrerer Netzwerkressourcen, die benötigt werden, um den einzelnen Netzwerkdienst bereitzustellen, einschließt.

9. Computerprogramm nach Anspruch 7, wobei die Anweisungen ferner durch den Prozessor ausführbar sind, um:
über die KI-Pipeline Merkmalsdaten der Kundennutzungsdaten zu identifizieren, die dafür konfiguriert sind, durch das Vorhersagemodell verwendet zu werden, um die vorhergesagten Nutzungsdaten zu erzeugen, wobei die Merkmalsdaten ein oder mehrere Merkmale der Nutzungsmuster einschließen; und
optional wobei die Merkmalsdaten mindestens eines von Folgendem einschließen: ein Ort, an dem jeder des einen oder der mehreren Cloud-Dienste jeweils durch den Kunden verwendet wird, eine Zeit, zu der jeder des einen oder der mehreren Cloud-Dienste jeweils durch den Kunden verwendet wird, eine Dienstgüteanforderung für jeden des einen oder der mehreren Cloud-Dienste und eine Bandbreitenanforderung für jeden des einen oder der mehreren Cloud-Dienste.

10. Computerprogramm nach Anspruch 7, wobei die Anweisungen ferner durch den Prozessor ausführbar sind, um:
über die KI-Pipeline externe Ereignisdaten zu erlangen, die das Auftreten eines externen Ereignisses angeben, von dem erwartet wird, dass es in der Zukunft auftritt, oder das in der Vergangenheit aufgetreten ist;
wobei die Kundennutzungsdaten Nutzungsdaten während des externen Ereignisses widerspiegeln; und
wobei die vorhergesagten Nutzungsdaten ferner eine Vorhersage eines einzelnen Cloud-Dienstes einschließen, von dem vorhergesagt wird, dass er auf der Grundlage des Auftretens des externen Ereignisses verwendet wird.

11. Computerprogramm nach Anspruch 7, wobei die Anweisungen ferner durch den Prozessor ausführbar sind, um:
über ein Blockchain-System zu validieren (190a, 290a) dass die Kundennutzungsdaten von dem Kunden stammen;
über das Blockchain-System zu validieren (190b, 290b), dass die vorhergesagten Nutzungsdaten von der KI-Pipeline stammen; und
über das Blockchain-System zu validieren (190c, 290c), dass die Anweisungen, den einzelnen Cloud-Dienst zu aktivieren, vom Dienstorchestrierungsserver stammen.

12. Computerlesbares Medium, auf dem das Computerprogramm nach einem der Ansprüche 7 bis 11 gespeichert ist.

13. Verfahren (400), Folgendes umfassend:
Empfangen eines durch einen Kunden bereitgestellten Vorhersagegenauigkeitsgrades von einer Benutzereingabe;
über eine KI-Pipeline (170, 270, 301, 630), Erlangen (405) von dem Kunden zugeordneten Kundennutzungsdaten aus einer oder mehreren Kundendatenquellen (180, 280), wobei die Kundennutzungsdaten Nutzungsmuster einer Vielzahl von durch den Kunden verwendeten Cloud-Diensten (185, 285) angeben;
über die KI-Pipeline, Erzeugen (415) vorhergesagter Nutzungsdaten auf der Grundlage der Kundennutzungsdaten, wobei die vorhergesagten Nutzungsdaten eine Vorhersage eines einzelnen Cloud-Dienstes der Vielzahl von Cloud-Diensten einschließen, von dem durch ein Vorhersagemodell vorhergesagt wird, dass er durch den Kunden verwendet wird, und
wobei die Vorhersage des einzelnen Cloud-Dienstes auf dem Vorhersagegenauigkeitsgrad basiert;
Veröffentlichen der vorhergesagten Nutzungsdaten über die KI-Pipeline,
Erlangen der vorhergesagten Nutzungsdaten von der KI-Pipeline über einen Dienstorchestrierungsserver (160, 260); und
Aktivieren (425) des einzelnen Cloud-Dienstes über den Dienstorchestrierungsserver auf der Grundlage der vorhergesagten Nutzungsdaten.

14. Verfahren nach Anspruch 13, wobei die Kundennutzungsdaten ferner Nutzungsmuster von einem oder mehreren Netzwerkdiensten durch den Kunden einschließen,
wobei die vorhergesagten Nutzungsdaten ferner eine Vorhersage eines einzelnen Netzwerkdienstes des einen oder der mehreren Netzwerkdienste einschließen, von dem vorhergesagt wird, dass er durch den Kunden verwendet wird,
wobei das Verfahren ferner Folgendes umfasst:
Bereithalten (435) des einzelnen Netzwerkdienstes über den Dienstorchestrierungsserver auf der Grundlage der vorhergesagten Nutzungsdaten;
wobei das Aktivieren des einzelnen Cloud-Dienstes das Bereithalten einer oder mehrerer Cloud-Ressourcen, die benötigt werden, um den einzelnen Cloud-Dienst bereitzustellen, einschließt, und
wobei das Bereithalten des einzelnen Netzwerkdienstes das Bereithalten einer oder mehrerer Netzwerkressourcen, die benötigt werden, um den einzelnen Netzwerkdienst bereitzustellen, einschließt.

15. Verfahren nach Anspruch 13, ferner Folgendes umfassend:
Validieren (190a, 290a) über ein Blockchain-System, dass die Kundennutzungsdaten von dem Kunden stammen;
Validieren (190b, 290b) über das Blockchain-System, dass die vorhergesagten Nutzungsdaten von der KI-Pipeline stammen; und
Validieren (190c, 290c) über das Blockchain-System, dass Anweisungen, den einzelnen Cloud-Dienst zu aktivieren, vom Dienstorchestrierungsserver stammen.

## Revendications

1. Système comprenant :
un pipeline d'intelligence artificielle, IA, (170, 270, 301, 630) comprenant :
un processeur configuré pour :
recevoir, en provenance d'une entrée utilisateur, un niveau d'exactitude de prédiction fourni par un client ;
obtenir, *via* une ou plusieurs sources de données de client, des données d'utilisation de client associées au client en provenance des une ou plusieurs sources de données de client (180, 280), dans lequel les données d'utilisation de client indiquent des modèles d'utilisation d'une pluralité de services infonuagiques (185, 285) utilisés par le client ;
générer, *via* un modèle prédictif, des données d'utilisation prédite sur la base des données d'utilisation de client, dans lequel les données d'utilisation prédite incluent une prédiction d'un service infonuagique individuel de la pluralité de services infonuagiques prédit pour être utilisé par le client, et
dans lequel la prédiction du service infonuagique individuel est basée sur le niveau d'exactitude de prédiction ;
publier les données d'utilisation prédite ; et
un serveur d'orchestration de services (160, 260) couplé au pipeline d'IA, le serveur d'orchestration de services étant configuré pour obtenir les données d'utilisation prédite en provenance du pipeline d'IA et activer le service infonuagique individuel sur la base des données d'utilisation prédite.

2. Système selon la revendication 1, dans lequel les données d'utilisation de client incluent en outre des modèles d'utilisation d'un ou plusieurs services réseau par le client,
dans lequel les données d'utilisation prédite incluent en outre une prédiction d'un service réseau individuel des un ou plusieurs services réseau prédit pour être utilisé par le client,
et dans lequel le serveur d'orchestration de services est en outre configuré pour approvisionner le service réseau individuel sur la base des données d'utilisation prédite ; et
facultativement dans lequel l'activation du service infonuagique individuel inclut l'approvisionnement d'une ou plusieurs ressources infonuagiques requises pour fournir le service infonuagique individuel, et dans lequel l'approvisionnement du service réseau individuel inclut l'approvisionnement d'une ou plusieurs ressources réseau requises pour fournir le service réseau individuel.

3. Système selon la revendication 1, dans lequel le processeur est configuré pour :
identifier des données de caractéristiques des données d'utilisation de client configurées pour être utilisées par le modèle prédictif pour générer les données d'utilisation prédite, dans lequel les données de caractéristiques incluent une ou plusieurs caractéristiques des modèles d'utilisation.

4. Système selon la revendication 3, dans lequel les données de caractéristiques incluent soit :
(i) au moins l'une d'un emplacement et d'une heure à laquelle chacun de la pluralité de services infonuagiques est respectivement utilisé par le client ; ou
(ii) au moins l'une d'une qualité d'exigence de service et d'exigence de bande passante pour chacun de la pluralité de services infonuagiques.

5. Système selon la revendication 1, dans lequel le processeur est configuré pour :
obtenir des données d'événement externe indiquant la survenue d'un événement externe prévu pour se produire dans le futur ou qui s'est produit historiquement ;
dans lequel les données d'utilisation de client reflètent des données d'utilisation pendant l'événement externe ; et
dans lequel les données d'utilisation prédite incluent en outre une prédiction d'un service infonuagique individuel prédit pour être utilisé sur la base de la survenue de l'événement externe.

6. Système selon la revendication 1 comprenant en outre un système de chaîne de blocs couplé au pipeline d'IA, dans lequel le système de chaîne de blocs est configuré pour valider (190a, 290a) que les données d'utilisation de client proviennent du client ; et
facultativement dans lequel le système de chaîne de blocs est en outre configuré pour valider (190b, 290b) que les données d'utilisation prédite proviennent du pipeline d'IA ; et
en outre facultativement dans lequel le système de chaîne de blocs est en outre configuré pour valider (190c, 290c) que des instructions pour activer le service infonuagique individuel proviennent du serveur d'orchestration de services.

7. Programme d'ordinateur comprenant des instructions qui, lorsqu'elles sont exécutées par un processeur, amènent le processeur à :
recevoir, en provenance d'une entrée utilisateur, un niveau d'exactitude de prédiction fourni par un client ;
obtenir, *via* un pipeline d'IA (170, 270, 301, 630), des données d'utilisation de client associées au client en provenance d'une ou plusieurs sources de données de client (180, 280), dans lequel les données d'utilisation de client indiquent des modèles d'utilisation d'une pluralité de services infonuagiques (185, 285) utilisés par le client ;
générer, *via* le pipeline d'IA, des données d'utilisation prédite sur la base des données d'utilisation de client, dans lequel les données d'utilisation prédite incluent une prédiction d'un service infonuagique individuel de la pluralité de services infonuagiques prédit par un modèle prédictif pour être utilisé par le client, et dans lequel la prédiction du service infonuagique individuel est basée sur le niveau d'exactitude de prédiction ;
publier, *via* le pipeline d'IA, les données d'utilisation prédite ;
obtenir les données d'utilisation prédite en provenance du pipeline d'IA ; et
activer le service infonuagique individuel sur la base des données d'utilisation prédite.

8. Programme d'ordinateur selon la revendication 7, dans lequel les données d'utilisation de client incluent en outre des modèles d'utilisation d'un ou plusieurs services réseau par le client,
dans lequel les données d'utilisation prédite incluent en outre une prédiction d'un service réseau individuel d'un ou plusieurs services réseau prédit pour être utilisé par le client,
et dans lequel les instructions sont en outre exécutables par le processeur pour approvisionner, *via* le serveur d'orchestration de services, le service réseau individuel sur la base des données d'utilisation prédite ; et
facultativement dans lequel l'activation du service infonuagique individuel inclut l'approvisionnement d'une ou plusieurs ressources infonuagiques requises pour fournir le service infonuagique individuel, et dans lequel l'approvisionnement du service réseau individuel inclut l'approvisionnement d'une ou plusieurs ressources réseau pour fournir le service réseau individuel.

9. Programme d'ordinateur selon la revendication 7, dans lequel les instructions sont en outre exécutables par le processeur pour :
identifier, *via* le pipeline d'IA, des données de caractéristiques des données d'utilisation de client configurées pour être utilisées par le modèle prédictif pour générer les données d'utilisation prédite, dans lequel les données de caractéristiques incluent une ou plusieurs caractéristiques des modèles d'utilisation ; et
facultativement dans lequel les données de caractéristiques incluent au moins l'un d'un emplacement auquel chacun des un ou plusieurs services infonuagiques sont respectivement utilisés par le client, d'une heure à laquelle chacun des un ou plusieurs services infonuagiques est respectivement utilisé par le client, d'une exigence de qualité de service pour chacun des un ou plusieurs services infonuagiques, et d'une exigence de bande passante pour chacun des un ou plusieurs services infonuagiques.

10. Programme d'ordinateur selon la revendication 7, dans lequel les instructions sont en outre exécutables par le processeur pour :
obtenir, *via* le pipeline d'IA, des données d'événement externe indiquant la survenue d'un événement externe prévu pour se produire dans le futur ou qui s'est produit historiquement ;
dans lequel les données d'utilisation de client reflètent des données d'utilisation pendant l'événement externe ; et
dans lequel les données d'utilisation prédite incluent en outre une prédiction d'un service infonuagique individuel prédit pour être utilisé sur la base de la survenue de l'événement externe.

11. Programme d'ordinateur selon la revendication 7, dans lequel les instructions sont en outre exécutables par le processeur pour :
valider (190a, 290a), *via* un système de chaîne de blocs, que les données d'utilisation de client proviennent du client ;
valider (190b, 290b), *via* le système de chaîne de blocs, que les données d'utilisation prédite proviennent du pipeline d'IA ; et
valider (190c, 290c), *via* le système de chaîne de blocs, que des instructions pour activer le service infonuagique individuel proviennent du serveur d'orchestration de services.

12. Support lisible par ordinateur présentant stocké sur celui-ci le programme d'ordinateur selon l'une quelconque des revendications 7 à 11.

13. Procédé (400) comprenant :
la réception, en provenance d'une entrée utilisateur, d'un niveau d'exactitude de prédiction fourni par un client ;
l'obtention (405), *via* un pipeline d'IA (170, 270, 301, 630), de données d'utilisation de client associées au client en provenance d'une ou plusieurs sources de données de client (180, 280), dans lequel les données d'utilisation de client indiquent des modèles d'utilisation d'une pluralité de services infonuagiques (185, 285) utilisés par le client ;
la génération (415), *via* le pipeline d'IA, de données d'utilisation prédite sur la base des données d'utilisation de client, dans lequel les données d'utilisation prédite incluent une prédiction d'un service infonuagique individuel de la pluralité de services infonuagiques prédit par un modèle prédictif pour être utilisé par le client, et
dans lequel la prédiction du service infonuagique individuel est basée sur le niveau d'exactitude de prédiction ;
la publication, *via* le pipeline d'IA, des données d'utilisation prédite ;
l'obtention, *via* un serveur d'orchestration de services (160, 260), des données d'utilisation prédite en provenance du pipeline d'IA ; et
l'activation (425), *via* le serveur d'orchestration de services, du service infonuagique individuel sur la base des données d'utilisation prédite.

14. Procédé selon la revendication 13, dans lequel les données d'utilisation de client incluent en outre des modèles d'utilisation d'un ou plusieurs services réseau par le client,
dans lequel les données d'utilisation prédite incluent en outre la prédiction d'un service réseau individuel des un ou plusieurs services réseau prédit pour être utilisé par le client,
le procédé comprenant en outre :
l'approvisionnement (435), *via* le serveur d'orchestration de services, du service réseau individuel sur la base des données d'utilisation prédite ;
dans lequel l'activation du service infonuagique individuel inclut l'approvisionnement d'une ou plusieurs ressources infonuagiques requises pour fournir le service infonuagique individuel, et
dans lequel l'approvisionnement du service réseau individuel inclut l'approvisionnement d'une ou plusieurs ressources réseau requises pour fournir le service réseau individuel.

15. Procédé selon la revendication 13 comprenant en outre :
la validation (190a, 290a), *via* un système de chaîne de blocs, que les données d'utilisation de client proviennent du client ;
la validation (190b, 290b), *via* le système de chaîne de blocs, que les données d'utilisation prédite proviennent du pipeline d'IA ; et
la validation (190c, 290c), *via* le système de chaîne de blocs, que des instructions pour activer le service infonuagique individuel proviennent du serveur d'orchestration de services.
